# EUROPEAN PATENT SPECIFICATION

(11) **EP 1 587 679 B1**
(45) Date of publication and mention of the grant of the patent: **14.11.2012**
(21) Application number: 04704799.8
(22) Date of filing: 23.01.2004
(51) Int. Cl.: B32B 27/18

(54) **OXYGEN SCAVENGING FILM WITH HIGH SLIP PROPERTIES**
SAUERSTOFF-DETEKTIONSSYSTEM FÜR FESTE BEHÄLTER
FILM ABSORBEUR D'OXYGENE POSSEDANT DES PROPRIETES DE GLISSEMENT ELEVEES

(30) Priority: 27.01.2003 US 442875 P; 30.01.2003 US 443750 P; 10.10.2003 US 683531
(43) Date of publication of application: 26.10.2005
(73) Proprietor: Cryovac, Inc., Duncan, SC 29334 (US)
(72) Inventor: SCHWARK, Dwight, W., Simpsonville, SC 29681 (US); SPEER, Drew, V., Simpsonville, SC 29681 (US); McALLISTER, Larry, B., Spartanburg, SC 29301 (US)
(74) Representative: Jackson, Martin Peter
(86) International application number: PCT/US2004/001712
(87) International publication number: WO 2004/067273

(56) References cited:
- EP-A- 0 182 463
- EP-A- 0 645 426
- WO-A-02/051705
- WO-A-02/099416
- US-A- 5 681 650
- US-B1- 6 413 333

## Description

This application claims the benefit of U.S. Provisional Application Nos. 60/442,875 filed January 27, 2003, and 60/443,750 filed January 30, 2003.

### Field of the Invention

The invention relates to an oxygen scavenging film with high slip properties.

### Background of the Invention

It is known that many oxygen sensitive products, including food products such as meat and cheese, smoked and processed luncheon meats, as well as non-food products such as electronic components, pharmaceuticals, and medical products, deteriorate in the presence of oxygen. Both the color and the flavor of foods can be adversely affected. The oxidation of lipids within the food product can result in the development of rancidity. These products benefit from the use of oxygen scavengers in their packaging.

Some of these oxygen scavengers, typically unsaturated polymers with a transition metal catalyst, can be triggered or activated by actinic radiation. Such materials offer the advantage of an oxygen scavenger that does not prematurely scavenge oxygen until such time as the user decides to use the oxygen scavenger in a commercial packaging environment. The oxygen scavenger is thus "dormant" until it is passed through a triggering unit, typically a bank of UV lights through which an oxygen scavenger in the form of a film is passed to trigger the oxygen scavenging activity of the material. This is usually done just prior to a packaging step, in which a package having an oxygen scavenger as a component is made, with an oxygen sensitive product placed in the package prior to closure of the package to extend the shelf life of the oxygen sensitive product.

Also, packaging films typically require a low coefficient of friction (COF) in order to process well on certain types of packaging equipment. In the case of vertical form fill seal (VFFS) equipment, typical film requirements are a film to film COF of less than 0.3. The resin choice for the surface layer of a VFFS film must also have sufficient heat seal properties. Thus, sealant layers typically include linear low density polyethylene (LLDPE), metallocene polymers, and ethylene/vinyl acetate copolymers. These materials are typically much tackier than polypropylene (PP) or propylene/ethylene copolymer (PEC), and present a challenge for the development of adequate film surface properties such as low COF or high slip.

Current antiblock/slip packages developed to overcome this problem have relied on various inorganic antiblock agents in combination with amide wax slip agents. Low molecular weight amide waxes require sufficient time to "bloom" to the surface before a low COF is achieved. It has been shown that pressure in a wound roll of film can reduce the "bloom" or diffusion rate. Given differential pressures throughout a roll of film that can exceed 400 psi, differential amounts of amide wax surface segregation are expected, and this has been experimentally verified. The result of this differential surface segregation is an inconsistency in slip or COF performance throughout a roll of film. Thus, only portions of a roll of film may be utilized on packaging equipment and the rest is either thrown away or returned to the supplier.

Another limitation of current antiblock/amide wax packages is also due to the migratory nature of the amide wax slip agent. Amide wax migration through packaging films, to the other non-wax containing surface, has been shown to result in poor lamination performance. To overcome such difficulties, corona treatment of the lamination side of the packaging film at the time of film manufacture and at the time of lamination, as well as the use of barrier layers within the packaging film are required.

Amide waxes also have several other limitations. During extrusion, amide waxes are volatile and collect on various portions of manufacturing equipment. These deposits may then sporadically break off and form deposits on the film. The presence of excess amounts of amide waxes at the surface is also known to result in poor ink adhesion and weaker heat seals.

Finally, conventional amide wax usage in oxygen scavenging films has been shown to degrade the oxygen scavenging performance of the film, e.g. oxygen scavenging rate, and also can negatively affect the organoleptic attributes of the film.

OSFilms™ (oxygen scavenging) are commercially available from Cryovac, Inc. Previous end-use applications have been limited to low speed thermoforming equipment where low film COF is not required. Many oxygen sensitive products are packaged on horizontal and vertical form fill and seal (HFFS and VFFS) packaging equipment, for example, jerky, nuts, dried fruit/vegetables, baked goods, cooked bacon, biscuits and meat, sliced lunch meats, and fractional pack coffee. However, commercially available HFFS machines (Klockner Bartelt, Hayssen, RPM, Do-Boy, Sig-Pack, etc.) and VFFS machines (Hayssen, Triangle, Bosch, Ila-pack, etc.) generally require films that have a relatively low coefficient of friction (COF), i.e. high slip, on one or both of the film surfaces. This need arises because of the high film transport speeds across forming portions of the equipment. Equipment manufacturer and customer recommendations typically require a film with a sealant to sealant COF value of between 0.2 and 0.4 (ASTM D 1894-99). For example, Hayssen literature recommends an inside to inside (sealant to sealant) COF value of 0.3 or below in order to run properly on a Hayssen Ultima VFFS machine. An outside to outside COF of greater than 0.3 is also recommended. Film to packaging equipment COF values are actually more critical than film to film COF values, but are obviously more difficult to measure. In addition, film stiffness also impacts machinability and must be taken into consideration.

In researching potential solutions to these problems, a variety of potential antiblock and slip agents in various sealant resins have been evaluated to prepare high-slip OSFilm™. Film test results indicate that although conventional combinations of inorganic antiblock and fatty amide wax slip agents can be effective for producing a low COF, oxygen scavenging film, properties such as oxygen scavenging rate, heat seal, and organoleptics are significantly degraded by the waxes.

In addition, fatty amide slip agents require adequate bloom time in oxygen scavenging films to yield high-slip, and are therefore potentially prone to the same inconsistent slip/openability, lamination, and printing problems that currently plague other fatty amide containing high-slip films.

A means to overcome these limitations was discovered in the course of this investigation. Film testing has shown that the combination of between 0.5 and 2 percent by weight of the relevant film layer, of an inorganic or organic particulate antiblock, and between 1 and 4 weight percent of an ultra-high molecular weight siloxane slip agent, yields a low COF, high-slip oxygen scavenging film, as the film is being manufactured. No bloom time is required with the siloxane containing film to generate high-slip, and no significant impact on oxygen scavenging rate, heat seal, interlaminar bond strength, or organoleptics was noted.

The non-migratory nature of ultra-high molecular weight (UHMW) siloxane polymer and the instantaneous slip or COF properties provided by the combination of the antiblock/siloxane polymer overcome the aforementioned limitations of current wax based antiblock/slip packages, without any significant degradation in the oxygen scavenging rate of oxygen scavenging films in which the antiblock/siloxane combination is used. The use of a non-migratory slip agent within the extruded surface layer provides numerous manufacturing and performance benefits.

WO 02/099416 discloses a multilayer film in accordance with the precharacterising section of claim 1.

US 6,413,333 discloses readily castable high density polyethylene (HDPE) films, containing broad molecular weight distribution HDPE resin having treated upper skin layers and untreated lower skin layers, preferably coextruded, on each side, wherein a particulate cross-linked hydrocarbyl-substituted polysiloxane is present in the untreated lower skin layer to reduce coefficient of friction and enhance machinability.

WO 02/051705 discloses a container including an oxygen scavenger.

EP-A-D,182,463 discloses a multilayer film structure including an antiblocking agent and a silicone oil layer of poly-dimethylsiloxane having a viscosity of 20,000 to 3,000,000 centistokes.

US 5,681, 650 discloses a multilayer polyolefin film including an antiblocking agent.

EP-A-0,645,426 discloses a film including an antiblocking agent and polydimethylsiloxane with a viscosity of 5000 to 100000 mm²/S.

The present invention provides a multilayer film comprising: a) a first and second outer layer each comprising a polymer; and b) an internal layer comprising an oxygen scavenger; characterized in that said at least one of the first and second outer layers comprises a blend of said polymer, an antiblock agent and a siloxane having a viscosity of from 1x10⁷ centistokes to 5x10⁷ centistokes, and, in that the kinetic coefficient of friction (film surface to film surface) of the film is 0.4 or less (ASTM D1894-99); and in that the average oxygen scavenging rate of the film is at least 20 cc/m²/day four days after an oxygen scavenging property of the film is activated.

### Definitions

"Oxygen scavenger", "oxygen scavenging", and the like herein means or refers to a composition, compound, film, film layer, coating, plastisol, gasket, or the like which can consume, deplete or react with oxygen from a given environment.

"Internal layer" and the like herein means a layer of a multilayer film that is not an outer layer, i.e. both surfaces of the internal layer are joined to other layers of the film.

"Ethylene/alpha-olefin copolymer" (EAO) herein refers to copolymers of ethylene with one or more comonomers selected from C₃ to C₁₀ alpha-olefins such as propene, butene-1,hexene-1, octene-1, etc. in which the molecules of the copolymers comprise long polymer chains with relatively few side chain branches arising from the alpha-olefin which was reacted with ethylene. This molecular structure is to be contrasted with conventional high pressure low or medium density polyethylenes which are highly branched with respect to EAOs and which high pressure polyethylenes contain both long chain and short chain branches. EAO includes such heterogeneous materials as linear medium density polyethylene (LMDPE), linear low density polyethylene (LLDPE), and very low and ultra low density polyethylene (VLDPE and ULDPE), such as DOWLEX™ or ATTANE™ resins supplied by Dow, ESCORENE™ or EXCEED™ resins supplied by Exxon; as well as linear homogeneous ethylene/alpha olefin copolymers (HEAO) such as TAFMER™ resins supplied by Mitsui Petrochemical Corporation, EXACT™ resins supplied by Exxon, or long chain branched (HEAO) AFFINITY™ resins supplied by the Dow Chemical Company, or ENGAGE™ resins supplied by DuPont Dow Elastomers.

"Polyamide" herein refers to polymers having amide linkages along the molecular chain, such as synthetic polyamides such as nylons. Furthermore, such term encompasses both polymers comprising repeating units derived from monomers, such as caprolactam, which polymerize to form a polyamide, as well as polymers of diamines and diacids, and copolymers of two or more amide monomers, including nylon terpolymers, sometimes referred to in the art as "copolyamides". "Polyamide" specifically includes those aliphatic polyamides or copolyamides commonly referred to as e.g. polyamide 6 (homopolymer based on ε- caprolactam), polyamide 6,6 (homopolycondensate based on hexamethylene diamine and adipic acid), polyamide 6,9 (homopolycondensate based on hexamethylene diamine and azelaic acid), polyamide 6,10 (homopolycondensate based on hexamethylene diamine and sebacic acid), polyamide 6,12 (homopolycondensate based on hexamethylene diamine and dodecandioic acid), polyamide 11 (homopolymer based on 11-aminoundecanoic acid), polyamide 12 (homopolymer based on ω-aminododecanoic acid or on laurolactam), polyamide 6/12 (polyamide copolymer based on ε-caprolactam and laurolactam), polyamide 6/6,6 (polyamide copolymer based on ε-caprolactam and hexamethylenediamine and adipic acid), polyamide 6,6/6,10 (polyamide copolymers based on hexamethylenediamine, adipic acid and sebacic acid), modifications thereof and blends thereof. Said term also includes crystalline or partially crystalline, or amorphous, aromatic or partially aromatic, polyamides. Examples of partially crystalline aromatic polyamides include meta-xylylene adipamide (MXD6), copolymers such as MXD6/MXDI, and the like. Examples of amorphous, semi-aromatic polyamides nonexclusively include poly(hexamethylene isophthalamide-co-terephthalamide) (PA-6,I/6T), poly(hexamethylene isophthalamide) (PA-6,1), and other polyamides abbreviated as PA-MXDI, PA-6/MXDT/I, PA-6,6/6I and the like.

"Ethylene homopolymer or copolymer" herein refers to ethylene homopolymer such as low density polyethylene; ethylene/alpha olefin copolymer such as those defined herein; ethylene/vinyl acetate copolymer, ethylene/alkyl acrylate copolymer; ethylene/(meth)acrylic acid copolymer; or ionomer resin.

"EVOH" herein refers to the saponified product of ethylene/vinyl ester copolymer, generally of ethylene/vinyl acetate copolymer, wherein the ethylene content is typically between 20 and 60 mole % of the copolymer, and the degree of saponification is generally higher than 85%, preferably higher than 95%.

"High density polyethylene" (HDPE) herein refers to a polyethylene having a density of between 0.94 and 0.965 grams per cubic centimeter.

"Ionomer resin" herein refers to a copolymer of ethylene and an ethylenically unsaturated monocarboxylic acid having the carboxylic acid groups partially neutralized by a metal ion, such as sodium or zinc, preferably zinc. Useful ionomers include those:
- in which sufficient metal ion is present to neutralize from about 15% to about 60% of the acid groups in the ionomer. The carboxylic acid is preferably "(meth)acrylic acid" - i.e. acrylic acid and/or methacrylic acid;
- having at least 50 weight % and preferably at least 80 weight % ethylene units;
- having from 1 to 20 weight percent acid units; and
- available, for example, from DuPont Corporation (Wilmington, DE) under the SURLYN trademark.

"Film" herein means a film, laminate, sheet, web, coating, or the like, which can be used to package an oxygen sensitive product. The film can be used as a component in a rigid, semi-rigid, or flexible product, and can be adhered to a non-polymeric or non-thermoplastic substrate such as paper or metal. The film can also be used as a coupon or insert within a package.

"Polymer" and the like herein means a homopolymer, but also copolymers thereof, including bispolymers, terpolymers, etc.

All compositional percentages used herein are presented on a "by weight" basis, unless designated otherwise.

### Summary Of The Invention

This invention comprises an oxygen scavenging film that includes one or both surface layers comprising a blend of an organic or inorganic antiblock agent and a dispersed ultra-high molecular weight (UHMW) siloxane polymer. By using the combination of an antiblock, agent and a dispersed UHMW siloxane polymer, a low coefficient of friction may be achieved at the time of manufacture, without waiting for the typical "bloom" time period experienced with conventional amide wax materials such as erucamide. More consistent slip throughout rolls of packaging film may be achieved because of the instantaneous slip properties achieved at the time of manufacture. Because of the non-migratory nature of the UHMW siloxane slip agent, delamination resulting from amide wax migration to a lamination interface may be reduced or avoided. The non-migratory nature of the UHMW siloxane slip agent has also been shown to have no significant negative impact on oxygen scavenging rates or organoleptic properties of oxygen scavenging films, unlike conventional amide wax slip agents.

In a first aspect of the present invention, a multilayer film comprises a first and second outer layer each comprising a polymer; and an internal layer comprising an oxygen scavenger; wherein at least one of the first and second outer layers comprises a blend of a siloxane having a viscosity of from 1x10⁷ centistokes to 5x10⁷ centistokes, and an antiblock agent.

The multilayer film can comprise a second internal layer comprising an olefinic polymer or copolymer, said second internal layer disposed between the internal layer comprising the oxygen scavenger, and one of the first and second outer layers.

The multilayer film can alternatively comprise a second internal layer comprising an olefinic polymer or copolymer, the second internal layer disposed between the internal layer comprising the oxygen scavenger, and the first outer layer; and a third internal layer comprising an olefinic polymer or copolymer, the third internal layer disposed between the internal layer comprising the oxygen scavenger, and the second outer layer.

The multilayer film can alternatively comprise a first layer comprising a blend of a polymer, a siloxane having a viscosity of from 1x10⁷ centistokes to 5x10⁷centistokes, and an antiblock agent; a second layer comprising an oxygen scavenger; a third layer comprising a polymeric adhesive; a fourth layer comprising a polyamide; a fifth layer comprising an oxygen barrier; a sixth layer comprising a polyamide; a seventh layer comprising a polymeric adhesive; and an eighth layer comprising a polymer. The polymer of the first and eighth layers can comprise one or more of e.g. ethylene/alpha olefin copolymer, ethylene/vinyl acetate copolymer, polypropylene, ionomer resin, ethylene/ acrylic or methacrylic acid copolymer' ethylene/ acrylate or methacrylate copolymer, and low density polyethylene. The polymeric adhesive of the third and seventh layers can comprise any or all of e.g. ethylene/vinyl acetate copolymer, anhydride grafted ethylene/vinyl acetate copolymer, anhydride grafted ethylene/alpha olefin copolymer, anhydride grafted high density polyethylene, anhydride grafted polypropylene, and anhydride grafted ethylene/acrylate copolymer. The polyamide of the fourth and sixth layers can comprise any or all of e.g. polyamide 6, polyamide 9, polyamide 10, polyamide 11, polyamide 12, polyamide 6,6, polyamide 6,10, polyamide 6,12, polyamide 6I, polyamide 6T, polyamide 6,9, copolyamide 6I/6T, and copolyamide 6/6,6.The oxygen barrier of the fifth layer can comprise any or all of e.g. polyester, polyvinyl alcohol, ethylene vinyl alcohol copolymer, polyethylene naphthalate, polyamide, copolyamide, polyacrylonitrile, acrylonitrile copolymer, liquid crystal polymer, SiOₓ, polyvinyl chloride, polyvinylidene chloride, vinylidene chloride copolymer, carbon, metal, and metal oxide.

The multilayer film can alternatively comprise a first layer comprising a blend of a polymer, a siloxane having a viscosity of from 1x10⁷ centistokes to 5x10⁷ centistokes, and an antiblock agent; a second layer comprising an oxygen scavenger; a third layer comprising a polymeric adhesive; a fourth layer comprising a polyamide; a fifth layer comprising an oxygen barrier; a sixth layer comprising a polyamide; a seventh layer comprising an amorphous polyamide; an eighth layer comprising a polymeric adhesive; and a ninth layer comprising a polyamide, polyester or polypropylene.

In a second aspect of the present invention, a laminate comprises a multilayer film comprising a first layer comprising a blend of a polymer, a siloxane having a viscosity of from 1x10⁷ centistokes to 5x10⁷ centistokes, and an antiblock agent; a second layer comprising an oxygen scavenger, and a third layer comprising a polymer; and a substrate bonded to the third layer of the multilayer film. The substrate can comprise a plastic such as a polyethylene terephthalate, an oriented polyamide or an oriented polypropylene; a paperboard, or a metal. The plastic substrate or paperboard can optionally be coated with an oxygen barrier material. In some embodiments, the third layer comprising a polymer may be unnecessary, so that the substrate can be bonded directly to the oxygen scavenger layer.

### Detailed Description of the Invention

The packaging film or laminate may include one or more layers, dependent upon the properties required of the film. For example, layers to achieve appropriate slip, modulus, oxygen and/or water vapor barrier, oxygen scavenging, meat adhesion, heat seal, or other chemical or physical properties may be included. The multilayer film may be manufactured by a variety of processes including, extrusion, coextrusion, lamination, coating, etc. One or both surfaces of the film are comprised of a blend of one or more polymers with the antiblock material and the dispersed UHMW siloxane polymer.

Conventional pouch, bag, or box manufacturing processes may be employed with the packaging film. Hermetic sealing of a pouch, bag, or other container made from the film of the invention will typically be preferable. The exact requirements of a container made from the film will depend on a variety of factors, including the chemical nature of the oxygen scavenger, amount of the oxygen scavenger, concentration of the oxygen scavenger in a host material or diluent, physical configuration of the oxygen scavenger, presence of hermetic sealing, vacuumization and/or modified atmosphere inside the container, initial oxygen concentration inside the container, intended end use of the oxygen scavenger, intended storage time of the container before use, level of initial dose of actinic radiation, etc.

### The outer (surface) layer(s)

Polymers that may be used for the outer (surface) layer(s), and for the first and third outer layers of the film of the laminate construction, can include any resin typically used to formulate packaging films such as the following polymers, their copolymers, or blends: ethylene polymer or copolymer such as ethylene/alpha olefin copolymer, polypropylene (PP) or propylene copolymer, polystyrene, polycarbonate, nylon (polyamide or copolyamide), acrylic, urethane, polyvinyl chloride, polyvinylidene chloride, polyester, ionomer, etc.

Antiblock agents typically include both organic and inorganic materials that have appropriate particle size and concentration for the layer into which they are incorporated. Particles that are not too large and with a refractive index close to that of the surrounding polymer matrix help to maintain optical transparency and appropriate surface haze. A variety of inorganic materials may be utilized including fumed, precipitated, and gelled silica, natural and synthetic silicate, natural and synthetic alumina, etc. Organic materials include crosslinked and uncrosslinked styrene or acrylic containing polymeric particles, fluoropolymer particles, etc. The antiblock, agents can be of any suitable size, such as from 0.01 microns to 50 microns in diameter, such as from 0.1 to 40 microns, and from 1 to 20 microns in diameter, and can be incorporated in any suitable amount, such as from 50 ppm to 25,000 ppm, such as from 100 to 20,000 ppm, and from 1,000 to 10,000 ppm, based on the weight of the surface layer in which the antiblock agent is present

The UHMW siloxane polymer is a polydimethylsiloxane polymer which can have a viscosity in the range of e.g. from 1 x 10⁷ cSt (centistokes) to 5 x 10⁷ cSt, such as from 2 x 10⁷ cSt to 4 x 10⁷ cSt. In embodiments where the UHMW siloxane polymer is not crosslinked, it will flow like a molten polymer. Useful properties such as a reduced film-to-film coefficient of friction and improved abrasion resistance, typically observed with high molecular weight (between 1x10⁴ cSt and 6 x 10⁴ cSt) siloxane polymers, have been found when the UHMW siloxane polymer is utilized in combination with an antiblock agent. The UHMW siloxane polymer can be incorporated at any suitable use level, e.g. from 5,000 ppm to 50,000 ppm, such as from 10,000 to 40,000 ppm, and from 20,000 to 30,000 ppm, based on the overall weight of the surface layer in which the siloxane polymer is present. Because of their much higher molecular weight, UHMW siloxane slip agents do not migrate and accumulate at surfaces and interfaces and thereby result in a degradation of surface/interfacial properties such as heat seal, ink adhesion, lamination, etc. When compounded in a polymeric resin to form a surface layer, the UHMW siloxane polymer typically forms a micro-dispersion with a particles size range of between 0.5 and 5 microns.

### Oxygen barrier multilayer film and laminates

High oxygen barrier multilayer films and laminates can be made from materials having an oxygen permeability, of the barrier material, less than 500 cm³ O₂ / m² ° day ° atmosphere (tested at 1 mil thick and at 25 °C according to ASTM D3985), e.g. less than 100, less than 50, and less than 25 cm³ O₂ / m² ° day ° atmosphere such as less than 10, less than 5, and less than 1 cm³ O₂ / m² • day • atmosphere. Examples of polymeric materials with low oxygen transmission rates are ethylene/vinyl alcohol copolymer (EVOH), polyvinylidene dichloride (PVDC), vinylidene chloride/ methyl acrylate copolymer, polyamide, and polyester.

Alternatively, metal foil or SiOx compounds can be used to provide low oxygen transmission to the container. Metalized foils can include a sputter coating or other application of a metal layer to a paperboard or polymeric substrate such as high density polyethylene (HDPE), ethylene/vinyl alcohol copolymer (EVOH), polypropylene (PP), polyethylene terephthalate (PET), polyethylene naphthenate (PEN), and polyamide (PA).

Alternatively, oxide coated webs (e.g. aluminum oxide or silicon oxide) can be used to provide low oxygen transmission to the container. Oxide coated foils can include a coating or other application of the oxide, such as alumina or silica, to a polymeric substrate such as high density polyethylene (HDPE), ethylene/vinyl alcohol copolymer (EVOH), polypropylene (PP), polyethylene terephthalate (PET), polyethylene naphthenate (PEN), and polyamide (PA).

Even a sufficiently thick layer of a polyolefin such as LLDPE, or PVC (polyvinyl chloride) can in some instances provide a sufficiently low oxygen transmission rate for the overall film for its intended function. The exact oxygen permeability optimally required for a given application can readily be determined through experimentation by one skilled in the art.

### The oxygen scavenger

Oxygen scavengers suitable for commercial use in multilayer filings and laminates of the present invention are disclosed in U.S. Patent No. 5,350,622, and a method of initiating oxygen scavenging generally is disclosed in U.S. Patent No 5,211,875. Suitable equipment for initiating oxygen scavenging is disclosed in US 6,287,481 (Luthra et al.). According to U.S. Patent No. 5,350,622, oxygen scavengers are made of an ethylenically unsaturated hydrocarbon and transition metal catalyst. The ethylenically unsaturated hydrocarbon may be either substituted or unsubstituted. As defined herein, an unsubstituted ethylenically unsaturated hydrocarbon is any compound that possesses at least one aliphatic carbon-carbon double bond and comprises 100% by weight carbon and hydrogen. A substituted ethylenically unsaturated hydrocarbon is defined herein as an ethylenically unsaturated hydrocarbon which possesses at least one aliphatic carbon-carbon double bond and comprises about 50% - 99% by weight carbon and hydrogen. A substituted or unsubstituted ethylenically unsaturated hydrocarbon can have two or more ethylenically unsaturated groups per molecule, such as three or more ethylenically unsaturated groups and a molecular weight equal to or greater than 1,000 weight average molecular weight

Examples of unsubstituted ethylenically unsaturated hydrocarbons include, but are not limited to, diene polymers such as polyisoprene, (e.g., trans-polyisoprene) and copolymers thereof, cis and trans 1,4-polybutadiene, 1,2-polybutadienes, (which are defined as those polybutadienes possessing greater than or equal to 50% 1,2 microstructure), and copolymers thereof, such as styrene/butadiene copolymer and styrene/isoprene copolymer. Such hydrocarbons also include polymeric compounds such as polypentenamer, polyoctenamer, and other polymers prepared by cyclic olefin metathesis; diene oligomers such as squalene; and polymers or copolymers with unsaturation derived from dicyclopentadiene, norbornadiene, 5-ethylidene-2-norbornene, 5-vinyl-2-norbornene, 4-vinylcyclohexene, 1,7-octadiene, or other monomers containing more than one carbon-carbon double bond (conjugated or non-conjugated).

Examples of substituted ethylenically unsaturated hydrocarbons include, but are not limited to, those with oxygen-containing moieties, such as esters, carboxylic acids, aldehydes, ethers, ketones, alcohols, peroxides, and/or hydroperoxides. Specific examples of such hydrocarbons include, but are not limited to, condensation polymers such as polyesters derived from monomers containing carbon-carbon double bonds, and unsaturated fatty acids such as oleic, ricinoleic, dehydrated ricinoleic, and linoleic acids and derivatives thereof, e.g. esters. Such hydrocarbons also include polymers or copolymers derived from (meth)allyl (meth)acrylates. Suitable oxygen scavenging polymers can be made by trans-esterification. Such polymers are disclosed in US Patent No. 5,859,145 (Ching et al.) (Chevron Research and Technology Company). The composition used may also comprise a mixture of two or more of the substituted or unsubstituted ethylenically unsaturated hydrocarbons described above. The hydrocarbon can have a weight average molecular weight of 1,000 or more, but an ethylenically unsaturated hydrocarbon having a lower molecular weight is usable, e.g. if it is blended with a film-forming polymer or blend of polymers.

Other oxygen scavengers which can be used in connection with this invention are disclosed in US Patent No. 5,958,254 (Rooney). These oxygen scavengers include at least one reducible organic compound which is reduced under predetermined conditions, the reduced form of the compound being oxidizable by molecular oxygen, wherein the reduction and/or subsequent oxidation of the organic compound occurs independent of the presence of a transition metal catalyst. The reducible organic compound is preferably a quinone, a photoreducible dye, or a carbonyl compound that has absorbance in the UV spectrum.

An additional example of oxygen scavengers which can be used in connection with this invention are disclosed in PCT patent publication WO 99/48963 (Chevron Chemical et al.). These oxygen scavengers include a polymer or oligomer having at least one cyclohexene group or functionality. These oxygen scavengers include a polymer having a polymeric backbone, cyclic olefinic pendent group, and linking group linking the olefinic pendent group to the polymeric backbone.

An oxygen scavenging composition suitable for use with the invention comprises:
(a) a polymer or lower molecular weight material containing substituted cyclohexene functionality according to the following diagram: 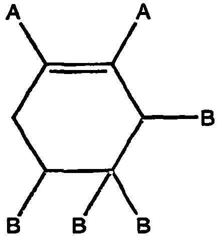 where A may be hydrogen or methyl and either one or two of the B groups is a heteroatom-containing linkage which attaches the cyclohexene ring to the said material, and wherein the remaining B groups are hydrogen or methyl;
(b) a transition metal catalyst; and optionally
(c) a photoinitiator.

The compositions may be polymeric in nature or they may be lower molecular weight materials. In either case, they may be blended with further polymers or other additives. In the case of low molecular weight materials, they will beneficially be compounded with a carrier resin before use.

When used in forming a packaging article, the oxygen scavenging composition of the present invention can include only the above-described polymers and a transition metal catalyst. However, photoinitiators can be added to further facilitate and control the initiation of oxygen scavenging properties. Suitable photoinitiators are known to those skilled in the art. Specific examples include, but are not limited to, benzophenone, and its derivatives, such as methoxybenzophenone, dimethoxybenzophenone, dimethylbenzophenone, diphenoxybenzophenone, allyloxybenzophenone, diallyloxybenzophenone, dodecyloxybenzophenone, dibenzosuberone, 4,4'-bis(4-isopropylphenoxy)benzophenone, 4-morpholinobenzophenone, 4-aminobenzophenone, tribenzoyl triphenylbenzene, tritoluoyl triphenylbenzene, 4,4'-bis(dinaethylamino)benzophenone, acetophenone and its derivatives, such as, o-methoxy-acetophenone, 4'-methoxyacetophenone, valerophenone, hexanophenone, α-phenyl-butyrophenone, p-morpholinopropiophenone, benzoin and its derivatives, such as, benzoin methyl ether, benzoin butyl ether, benzoin tetrahydropyranyl ether, 4-o-morpholinodeoxybenzoin, substituted and unsubstituted anthraquinones, α-tetralone, acenaphthenequinone, 9-acetylphenanthrene,2-acetyl-phenanthrene, 10-thioxanthenone, 3-acetyl-phenanmrene, 3-acetylindole, 9-fluorenone, 1-indanone, 1,3,5-triacetylbenzene, thioxanthen-9-one, isopropylthioxanthen-9-one, xanthene-9-one, 7-H-benz[de]anthracen-7-one, 1'-acetonaphthone, 2'-acetonaphthone, acetonaphthone, 2,4,6-trimethylbenzoyldiphenylphosphine oxide, bis(2,4,6-trimethylbenzoyl)phenylphosphine oxide, ethyl-2,4,6-trimethylbenzoylphenyl phosphinate, bis(2,6-dimethoxybenzoyl)-2,4,4-trimethylpentyl phosphine oxide, benz[a]anthracene-7,12-dione, 2,2-dimethoxy-2-phenylacetophenone, α,α-diethoxyacetophenone, α,α-dibutoxyacetophenone, 4-benzoyl-4'-methyl(diphenyl sulfide) and the like. Single oxygen-generating photosensitizers such as Rose Bengal, methylene blue, and tetraphenylporphine as well as polymeric initiators such as poly(ethylene carbon monoxide) and oligo[2-hydroxy-2-methyl-1-[4-(1-methylvinyl)phenyl]propanone] also can be used. The amount of photoinitiator can depend on the amount and type of cyclic unsaturation present in the polymer, the wavelength and intensity of radiation used, the nature and amount of antioxidants used, and the type of photoinitiator used.

Also suitable for use in the present invention is the oxygen scavenger of US Patent No. 6,255,248 (Bansleben et al.), which discloses a copolymer of ethylene and a strained, cyclic alkylene, preferably cyclopentene; and a transition metal catalyst.

Another oxygen scavenger which can be used in connection with this invention is the oxygen scavenger of US Patent No. 6,214,254 (Gauthier et al.) , which discloses ethylene/vinyl aralkyl copolymer and a transition metal catalyst.

As indicated above, the oxygen scavenging polymer is combined with a transition metal catalyst. Suitable metal catalysts are those which can readily interconvert between at least two oxidation states.

The catalyst can be in the form of a transition metal salt, with the metal selected from the first, second or third transition series of the Periodic Table. Suitable metals include, but are not limited to, manganese II or III, iron II or III, cobalt II or III, nickel II or III, copper I or II, rhodium II, III or IV, and ruthenium II or III. The oxidation state of the metal when introduced is not necessarily that of the active form. Suitable counterions for the metal include, but are not limited to, chloride, acetate, stearate, palmitate, caprylate, linoleate, tallate, 2-ethylhexanoate, neodecanoate, oleate or naphthenate. Examples of useful salts include cobalt (II) 2-ethylhexanoate, cobalt stearate, and cobalt (II) neodecanoate. The metal salt may also be an ionomer, in which case a polymeric counterion is employed. Such ionomers are well known in the art.

Any of the above-mentioned oxygen scavengers and transition metal catalyst can be further combined with one or more polymeric diluents, such as thermoplastic polymers which are typically used to form film layers in plastic packaging articles. In the manufacture of certain packaging articles well known thermosets can also be used as the polymeric diluent.

Further additives can also be included in the composition to impart properties desired for the particular article being manufactured. Such additives include, but are not limited to, fillers, pigments, dyestuffs, antioxidants, stabilizers, processing aids, plasticizers, fire retardants, anti-fog agents, etc.

The mixing of the components listed above can be accomplished by melt blending at a temperature in the range of 50°C to 300°C. However, alternatives such as the use of a solvent followed by evaporation may also be employed.

Oxygen scavenging structures can sometimes generate reaction byproducts, which can affect the taste and smell of the packaged material (i.e. organoleptic properties), or raise food regulatory issues. This problem can be minimized by the use of polymeric functional barriers. Polymeric functional barriers for oxygen scavenging applications are disclosed in WO 96/08371 to Ching et al.(Chevron Chemical Company),WO 94/06626 to Balloni *et al*., and copending US Patent Application Serial Nos. 08/813752 (Blinka et al.) and 09/445645 (Miranda), all of which include high glass transition temperature (T_{g}) glassy polymers such as polyethylene terephthalate (PET) and nylon 6, including oriented PET and nylon 6; low T_{g} polymers and their blends; a polymer derived from a propylene monomer; a polymer derived from a methyl acrylate monomer, a polymer derived from a butyl acrylate monomer, a polymer derived from a methacrylic acid monomer, polyethylene terephthalate glycol (PETG); amorphous nylon; ionomer, a polymeric blend including a polyterpene; and poly (lactic acid). The functional barriers can be incorporated into one or more layers of a multilayer film or other article that includes an oxygen scavenging layer.

### Examples

A variety of slip and antiblock materials were used as is, or first compounded into a masterbatch, and screened in the surface layer(s) of three, five, eight, and nine layer oxygen scavenging (OS) type films. For some investigations, three layer OS films were laminated with a solvent based polyurethane adhesive (AD1) to 0.5 mil saran coated polyethylene terephthalate (PET1). The eight layer OS films were laminated to 0.5 mil chemically primed polyethylene terephthalate (PET2), for some investigations. The laminated and non-laminated OS films were tested for haze, COF, oxygen scavenging, heat seal, and organoleptic properties. Haze of the films was measured using a BYK-GARDENER HAZE-GARD PLUS™ instrument according to ASTM F-904 and ASTM D-1003. Film-to-film kinetic and static COF values for the films were measured using an Instrumentors, Inc. Slip/Peel Tester according to ASTM D1894-99.

To determine the oxygen scavenging rate of the films, two methods were used to prepare the films. In both cases, film samples were UV irradiated with either a Cryovac Model 4104V Scavenging Initiation System (SIS) unit or an Anderson/Vreeland unit to give a dose of 700-800 mJ/cm² of UV C. In one method, irradiated films of well-defined area (usually 200 cm²) were then vacuum packaged in barrier pouches (P 640B™, Cryovac division of Sealed Air Corp.) having an oxygen transmission rate (OTR) of 5 cc/m²/day). The pouches were inflated with 300 cc of nitrogen atmosphere at about 1% residual oxygen. In the second method, irradiated film samples were either used directly as lidstock, or first taped to a Cryovac R660B™ barrier, non-oxygen scavenging laminate film when an oxygen barrier was not included, on a Multivac R230™ packaging machine, along with bottom web (T6070B™, Cryovac division of Sealed Air Corp.). Gas flushing with the same 1% residual oxygen was also utilized. Samples were then stored at 4-5 °C (refrigerated) for the duration of the test. Portions of the headspace were periodically withdrawn and analyzed for oxygen with a Mocon PAC CHECK™ model 400 or 450 oxygen analyzer.

The average oxygen scavenging rate was calculated by considering only the end points, with the following formula: Average Rate = cc O₂ scavenged/(m²oday), and in these examples was calculated 4 days after UV triggering. The peak (instantaneous) rate is the highest scavenging rate observed during any sampling period, and is given by: Δ cc O₂ scavenged/(m²•Δday), where Δ is the incremental change between two consecutive measurements. Measurements are typically taken on the day of triggering and after 1, 4, 7, 14, and 21 days after triggering. Rates are further reported as the mean of at least three replicates.

Heat seal strength of the sealed films was measured according to the following methods. Several of the laminated three layer films were run on a Klockner Bartelt HFFS equipment at various speeds with varying seal temperatures and the sealant layer was sealed to itself. Alternatively, three layer laminated films were sealed on a Vertrod 84EPCS™ at 400 °F and 150 ms dwell time. Seal strength was then measured using an Instron Model No. 4301 according to ASTM F88.

Evaluation of the organoleptic properties of oxygen scavenging films was performed by the following method. Packages containing 200 ml of water were formed on a Multivac R230™ packaging machine equipped with a Cryovac Model 4104V™ Scavenging Initiation System (SIS) using oxygen scavenging films as the top web and Cryovac T6070B™ as the bottom web. Packages were flushed with approximately 2% residual oxygen in nitrogen and had an approximate headspace of 800 cc. Two packages of each film were prepared for replicate purposes. Packages were checked to confirm oxygen scavenging and were then stored at room temperature, 75 °F (24 °C), for 7 days.

Sensory analysis with a panel trained for oxygen scavenging films was performed to determine if the films imparted a different taste to water packaged with the oxygen scavenging films. For the Triangle difference organoleptic test method, three water samples were presented to the panelists, where two of the water samples were identical and the panelists were asked to identify the odd water sample and comment on taste differences. Statistical difference at the .05 probability or □ level was utilized to assess whether there was a significant organoleptic difference between the oxygen scavenging films.

### Materials

Materials used in these studies are identified Table 1 below.

**Table 1**

| Materials Identification. | | |
|---|---|---|
| **Material Code** | **Tradename Or Designation** | **Source(s)** |
| AB1 | ZEEOSPHERE W410™ | 3M |
| AB2 | 10,075ACP SYLOID™ | Teknor Color |
| AB3 | 10853™ | Ampacet |
| AB4 | POLYBATCH AB-5™ | A. Schulman |
| AB5 | 10417™ | Colortec |
| AD1 | ADCOTE 532A^{™} and ADCOTE 532B^{™} | Rohm & Haas |
| AD2 | PLEXAR PX 114™ | Equistar |
| AD3 | PX2049^{™} | Equistar |
| AD4 | BYNEL CXA 39E660^{™} | DuPont |
| EV1 | AC400A^{™} | Allied |
| EV2 | PE 1375™ | Huntsman |
| EV3 | ESCORENE LD-318.92™ | ExxonMobil |
| EV4 | ESCORENE LD-409.09™ | ExxonMobil |
| NY1 | ULTRAMID™ B 35 NATURAL | BASF |
| NY2 | GRIVORY™ G21 | EMS |
| NY3 | CAPRON B100WP^{™} | Honeywell |
| NY4 | ULTRAMID™ KR-4407 | BASF |
| OBI | SOARNOL™ ET | Nippon Gohsei |
| OS1 | OSP500R™ | Chevron Phillips |
| OSM1 | DS4567M™ | Chevron Phillips |
| OSM2 | DS4560M™ | Chevron Phillips |
| PE01 | DOWLEX™ 2035 | Dow |
| PE02 | ATTANE™ 4202 | Dow |
| PE03 | ESCORENE™LD-200.48 | Exxon |
| PE04 | DOWLEX™ 2045.03 | Dow |
| PE05 | EXACT™ 4150 | Exxon |
| PE06 | PE 1017™ | Chevron/Phillips |
| PE07 | AFFINITY™ PL 1850 | Dow |
| PE08 | DOWLEX™2244G | Dow |
| PE09 | PE1042CS15™ | Huntsman |
| PE10 | EXCEED™2718CB | ExxonMobil |
| PE11 | ESCORENE™LD-134.09 | Exxon |
| PET1 | Terphane 22.00^{™} | Terphane Inc. |
| PET2 | HOSTAPHAN 2DEF/2DEFN™ | Mitsubishi |
| SL1 | KEMAMIDE E ULTRA™ | Crompton |
| SL2 | FSU 255E™ | A. Schulman |
| SL3 | TOSPEARL 2000B™ | GE Toshiba Silicones |
| SL4 | TOSPEARL 3120™ | GE Toshiba Silicones |
| SL5 | TF9201™ | Dyneon |
| SL6 | ZONYL MP 1600N™ | DuPont |
| SL7 | EPOSTAR MA1010™ | Nippon Shokubai |
| SL8 | EPOSTAR MA1013™ | Nippon Shokubai |
| SL9 | TOPAS 6013™ | Ticona |
| SL10 | TOPAS 5013™ | Ticona |
| SL11 | CARBOGLIDE AS1788™ | Saint-Gobain Advanced Ceramics |
| SL12 | 1080864S™ | Clariant |
| SL13 | GRILON™ XE 3361 | EMS |
| SX1 | MB50-313™ | Dow Corning |
| SX2 | MB50-002™ | Dow Corning |

AB1 is non-porous alkali aluminosilicate microspheres.
AB2 is a masterbatch having 89.8% low density polyethylene (EXXON LD203.48™), 10% silica (SYLOID™ 74X6500™), and 0.2% calcium stearate.
AB3 is a masterbatch having about 80% linear low density polyethylene, and about 20% of an antiblocking agent (diatomaceous earth).
AB4 is a masterbatch having about 95% low density polyethylene with about 5% silica and antioxidant, and used as a antiblock agent
AB5 is a masterbatch containing 20 wt% of a 3-5 µm alumino-silicate zeolite absorbent material.
AD1 is a 50/50 blend of a solvent based two component polyurethane adhesive system that is diluted with approximately 10 wt% ethyl acetate and is used to laminate two films.
AD2 is an anhydride grafted ethylene/vinyl acetate copolymer (EVA), with 8.5% vinyl acetate monomer, and a melt index of 2.0, used as an adhesive or tie layer during coextrusion.
AD3 is an anhydride grafted high density polyethylene with a melt index of 4.7 and a density of 0.955, used as an adhesive or tie layer during coextrusion.
AD4 is an anhydride grafted modified ethylene copolymer in polyethylene vinyl acetate with a vinyl acetate content of 11.8%.
EV1 is ethylene/vinyl acetate copolymer with a vinyl acetate content of 9%.
EV2 is ethylene/vinyl acetate copolymer with 3.6% vinyl acetate monomer, and a melt index of 2.0.
EV3 is ethylene/vinyl acetate copolymer with 9% vinyl acetate monomer, and a melt index of 2.0.
EV4 is ethylene/vinyl acetate copolymer with 9.9% vinyl acetate monomer, and a melt index of 4.1.
NY1 is nylon 6 (polycaprolactam).
NY2 is an amorphous copolyamide (6I/6T) derived from hexamethylene diamine, isophthalic acid, and terephthalic acid.
NY3 is nylon 6 (polycaprolactam).
NY4 is nylon 6 (polycaprolactam).
OB1 is an ethylene/vinyl alcohol copolymer with 38 mole percent ethylene.
OS1 is an oxygen scavenger resin, poly(ethylene/methyl acrylate/ cyclohexene methyl acrylate).
OSM1 is a masterbatch produced from a carrier resin (ethylene/methyl acrylate/cyclohenene methyl acrylate) from Chevron, with 1%, by weight of the masterbatch, of cobalt present in a liquid cobalt oleate, and 1%, by weight of the masterbatch, of tribenzoyl triphenyl benzene.
OSM2 is a masterbatch produced from a carrier resin (ethylene/methyl acrylate/cyclohexene methyl acrylate) designated SP1205™ from Chevron, with 1%, by weight of the masterbatch, of cobalt present in a prill (solid) cobalt oleate, and 1%, by weight of the masterbatch, of tribenzoyl triphenyl benzene.
PE01 is a linear ethylene/ 1-octene copolymer with a density of 0.920 gm/cc and a melt flow index of between 5.2 and 6.8.
PE02 is a linear ethylene/1-octene copolymer with a density of between 0.911 and 0.915 grams/cc, a melt flow index of 3.01, and an octene content of 9%.
PE03 is a low density polyethylene resin with a density of 0.915 grams/cc.
PE04 is a linear ethylene/ 1-octene copolymer with a density of 0.920 gm/cc and an octene-1 comonomer content of 6.5%, and a melt flow index of 1.1.
PE05 is a single site catalyzed ethylene/1-hexene copolymer with a density of 0.895 grams/cc, and a melt index of 3.43.
PE06 is a low density polyethylene with a density of 0.918 grams/cc.
PE07 is a single site catalyzed ethylene/1-octene copolymer with a density of 0.902 grams/cc, a melt index of 3.0, and an octene-1 comonomer content of 12%.
PE08 is a linear ethylene/octene-1 copolymer with a density of 0.9155 grams/cc.
PE09 is a low density polyethylene resin with a density of 0.922 grams/cc.
PE10 is a single site catalyzed ethylene/1-hexene copolymer with a density of 0.918 grams/cc, and a melt index of 2.65.
PE11 is a low density polyethylene resin with a density of 0.920 grams/cc.
, PET1 is a saran coated polyethylene terephthalate film.
PET2 is a chemically primed polyethylene terephthalate film.
SL1 is an amide of erucic acid, used as a slip agent
SL2 is a masterbatch having 70% low density polyethylene with 25% silica and 5% erucamide.
SL3 is a spherical silicon particle with a diameter of 4-8 micrometers.
SL4 is a spherical silicon particle with a diameter of 12 micrometers.
SL5 is a polytetrafluoroethylene micropowder with an approximate particle size of 9 micrometers.
SL6 is a polytetrafluoroethylene fluoroadditive powder with an approximate particle size of 12 micrometers.
SL7 is a crosslinked polymethylmethacrylate powder with an approximate particle size of 10 micrometers.
SL8 is a crosslinked polymethylmethacrylate powder with an approximate particle size of 13 micrometers.
SL9 is a cyclic-olefinic copolymer of ethylene-norbornene.
SL10 is a cyclic-olefinic copolymer of ethylene-norbornene.
SL11 is pre-compounded 8-10 micrometer boron-nitride particles at 1.5 wt% in LLDPE.
SL12 is a masterbatch having 70% nylon 6 with 20% silica and 10% erucamide.
SL13 is a masterbatch having 85% nylon 6 with 10% talc and calcium carbonate and 5% ethylene bis stearamide.
SX1 is an ultra-high molecular weight polysiloxane masterbatch in an LLDPE carrier resin with a density of 0.94 grams/cc.
SX2 is an ultra-high molecular weight polysiloxane masterbatch in an LDPE carrier resin.

In addition to the commercially available masterbatches seen above, a wide variety of antiblock and slip agents were compounded into various LLDPE (PE01 and PE02) and LDPE (PE03) base resins to prepare additional masterbatches. An ethylene-vinyl acetate copolymer containing 9% vinyl acetate (EV1), was used as a feeding aid for some of the slip and antiblock powders. These materbatches were prepared on a Werner & Pfleiderer 30 mm twin screw extruder or on a Berstorff 40 mm twin screw extruder. A list of these masterbatches is seen in Table 2. Primary fatty amides such as erucamide (SL1) were either compounded into 10 wt% masterbatches (MB1 and MB2) for use or used as a commercially available 5% masterbatch (SL2). A silica containing masterbatch with 10 wt% of a 4 micrometer non-porous alkali aluminosilicate microsphere (AB1) was prepared (MB3). In addition several commercially available masterbatches containing 10 wt% of 6 micrometer porous silica (AB2), 20 wt% of 5 micrometer porous, diatomaceous earth silica (AB3), and 5 wt% of 5 micrometer porous silica (AB4) were also utilized. Finally, a commercially available masterbatch from Colortec, 10417™ (AB5), containing 20 wt% of a 3-5 µm alumino-silicate zeolite absorbent material was evaluated.

In addition to the conventional amide wax slip and silica antiblock materials listed above, several other materials were also compounded. Two types of silicone materials were examined. Samples of TOSPEARL™, a spherical silicone particle from GE Toshiba Silicones having a three-dimensional network structure that is intermediate between an inorganic and organic particle, were compounded into 5 wt% masterbatches (MB4 and MB5) included TOSPEARL 2000B™ (SL3) and TOSPEARL 3120™ (SL4), with approximate particle sizes of 4-8 and 12 micrometers, respectively. Pre-compounded ultra-high molecular weight (UHMW) siloxane materials from Dow Corning, MB50-313™ which is SX1 herein, and MB50-002™, which is SX2 herein, were also examined. The pre-compounded materials are 50 wt% UHMW siloxane masterbatches with LLDPE and LDPE, respectively, and have UHMW particle sizes of 0.5-5.0 micrometers. Several fluoropolymer particles were also compounded. A low molecular weight, non-degraded polytetrafluoroethylene (PTFE) micropowders from Dyneon with an approximate particle size of 9 micrometers, TF9201™ (SL5), and a PTFE fluoroadditive powder from DuPont with an approximate particle size of 12 micrometers, ZONYL MP 1600N™ (SL6), were also compounded into masterbatches MB6 and MB7, respectively. Crosslinked polymethylmethacrylate (PMMA) with particle sizes of 10 micrometers, EPOSTAR MA1010™ (SL7), and 13 micrometers, EPOSTAR MA1013™ (SL8), from Nippon Shokubai was compounded into MB8 and MB9, respectively. Cyclic-olefinic copolymers of ethylene-norbornene, TOPAS 6013™ (SL9) and TOPAS 5013™ (SL10) from Ticona, were either pre-compounded (MB10 from SL9) or used directly (SL10). Finally, pre-compounded 8-10 micrometers boron-nitride particles at 1.5 wt% in LLDPE, CARBOGLIDE AS1788™ (SL11), typically used as a melt-processing aid for metallocene blown films, from Saint-Gobain Advanced Ceramics was examined.

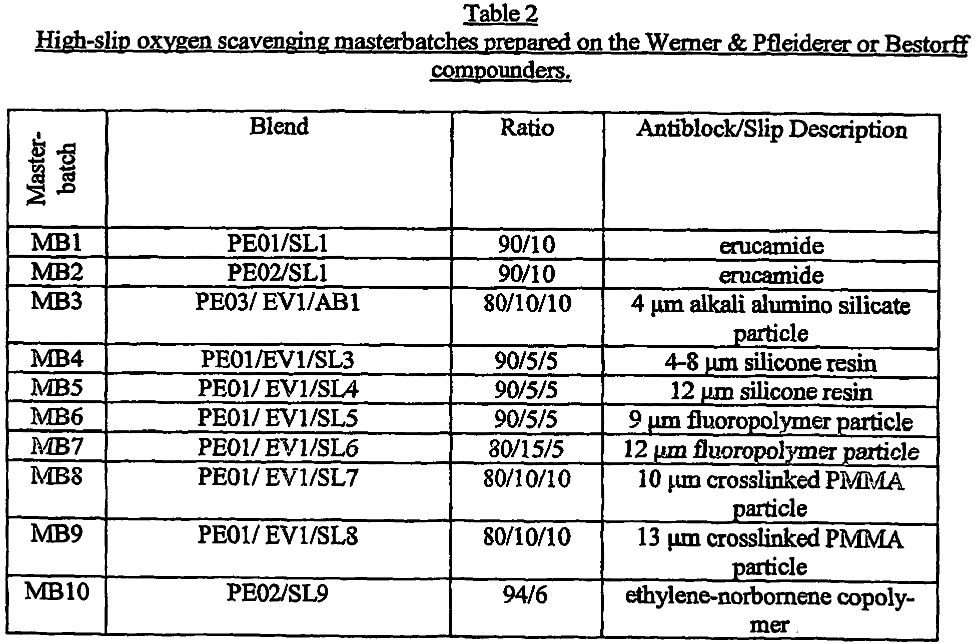

### Three Layer Films

Three-layer blown films, where the three layers included a sealant layer, an oxygen scavenging layer and a bulk layer, as depicted schematically below in film structure #1, were prepared. Typical gauges for the three layers are indicated below.

| Sealant | OS | Bulk |
|---|---|---|
| Base Resin | 90% OS1 | Base Resin |
| Antiblock Slip | 10% OSM1 or OSM2 | |
| 0.25 mil | 0.75mil | 1.50 mil |

Film structure #1 for three layer oxygen scavenging films

The actual film structure, kinetic and static COF values after aging the film several days, and average and peak refrigerated oxygen scavenging rates are seen in the examples below. "Sealant" refers to sealant layer of the film; "OS" refers to oxygen scavenging layer of the film; "bulk" refers to an additional layer comprising any suitable polymer, such as those shown in the examples, or e.g. an ethylene polymer or copolymer such as ethylene/alpha olefin copolymer.

| Sealant | OS | Bulk | Aged COF Kinetic-Static | Refrigerated OS Rate (cc/m²/day) Avg.-Peak |
|---|---|---|---|---|
| Control Example 1 | | | | |
| LLDPE | OS1 | LLDPE | | |
| (100 PE02) | OSM1 | + 0.4 wt% silica(92/8 PE04/AB4) | | |
| 0.25 mil | 0.5 mil | 0.8 mil | | |
| | | | Block | 30.3-53.9 |

| Comparative Example 2 | | | | |
|---|---|---|---|---|
| LLDPE | OS1 | LLDPE | | |
| + 2.5 wt% silica | OSM1 | + 0.4 wt% silica | | |
| + 0.5 wt% erucamide (90/10 PE02/SL2) | | | | |
| | | (92/8 PE04/AB4) | | |
| 0.25 mil | 0.5 mil | 1.5 mil | | |
| | | | 0.61-0.65 | 24.5-39.3 |

| Comparative Example 3 | | | | |
|---|---|---|---|---|
| LLDPE | OS1 | LLDPE | | |
| + 2.5 wt% silica | OSM1 | + 2.5 wt% silica | | |
| + 0.5 wt% erucamide (90/10 PE02/SL2) | | + 0.5 wt% erucamide (90/10 PE04/SL2) | | |
| 0.25 mil | 0.5 mil | 1.5 mil | | |
| | | | 0.22-0.29 | 18.9-26.6 |

As can be seen from the data above, the use of a sufficient amount of a conventional erucamide slip additive to achieve an aged COF value below 0.3 significantly degraded oxygen scavenging performance.

Experiments utilizing a Dow Corning UHWM siloxane and either an inorganic silica antiblock, or an organic crosslinked polymethylmethacrylate (X-link PMMA) in the same LLDPE sealant or a sealant containing a blend of a metallocene LLDPE with LDPE were prepared. Structures utilized for the investigation and their kinetic-static COF values immediately after manufacture*, as well as refrigerated oxygen scavenging rates and haze are shown below.

| Sealant | OS | Bulk | Unaged COF* Kinetic-Static | Refrigerated OS Rate (cc/m²/day) Avg.-Peak | Haze |
|---|---|---|---|---|---|
| Control Example 4 | | | | | |
| LINEAR LOW DENSITY POLYETHYLENE | OS1 | LLDPE | | | |
| + 1.0 wt% silica (90/10 PE02/AB2) | OSM1 | (100 PE04) | | | |
| 0.25 mil | 0.75 mil | 1.0 mil | | | |
| | | | 0.71-0.78 | 25.2-41.3 | 11.2 |

| Control Example 5 | | | | | |
|---|---|---|---|---|---|
| LINEAR LOW DENSITY POLYETHYLENE + 1.0 wt% X-link PMMA (90/10 PE02/MB9) | OS1 | LLDPE | | | |
| | OSM1 | (100 PE04) | | | |
| 0.25 mil | 0.75 mil | 1.0 mil | | | |
| | | | 0.71-0.72 | | 9.0 |

| Example 6 | | | | | |
|---|---|---|---|---|---|
| LLDPE | OS1 | LLDPE | | | |
| + 1.0 wt% silica | OSM1 | | | | |
| + 1.5 wt% UHMW si-loxane (87/10/3 PE02/AB2/SX1) | | (100 PE04) | | | |
| 0.25 mil | 0.75 mil | 1.0 mil | | | |
| | | | 0.22-0.29 | 25.8-42.7 | 17.2 |

| Example 7 | | | | | |
|---|---|---|---|---|---|
| LLDPE | OS1 | LLDPE | | | |
| + 0.5 wt% silica | OSM1 | | | | |
| + 2.0 wt% UHMW siloxane (91/5/4 PE02/AB2/SX1) | | (100 PE04) | | | |
| 0.25 mil | 0.75 mil | 1.0 mil | | | |
| | | | 0.25-0.39 | 26.0-38.9 | 12.1 |

| Example 8 | | | | | |
|---|---|---|---|---|---|
| LLDPE | OS1 | LLDPE | | | |
| + 1.0 wt% silica | OSM1 | | | | |
| + 3.0 wt% UHMW siloxane (84/10/6 PE02/AB2/SX1) | | (100 PE04) | | | |
| 0.25 mil | 0.75 mil | 1.0 mil | | | |
| | | | 0.17-0.31 | 25.7-43.6 | 15.6 |

| Example 9 | | | | | |
|---|---|---|---|---|---|
| m-LLDPE/LDPE (2/1) | OS1 | EVA | | | |
| + 1.6 wt% silica | OSM1 | + 1.0 wt% silica | | | |
| + 2.0 wt% UHMW siloxane (60/28/8/4 PE05/PE06/AB3/SX2) | | (95/5 EV2/AB3) | | | |
| 0.25 mil | 0.75 mil | 1.0 mil | | | |
| | | | 0.30-0.46 | 25.4-49.3 | 11.6 |

| Example 10 | | | | | |
|---|---|---|---|---|---|
| LINEAR LOW DENSITY POLYETHYLENE | OS1 | LLDPE | | | |
| + 1.0 wt% X-link PMMA | OSM1 | | | | |
| + 1.5 wt% UHMW siloxane (87/10/3 PE02/MB9/SX1) | | (100 PE04) | | | |
| 0.25 mil | 0.75 mil | 1.0 mil | | | |
| | | | 0.17-0.26 | 24.7-39.6 | 10.9 |

| Comparative Example 11 | | | | | |
|---|---|---|---|---|---|
| LLDPE | OS1 | LLDPE | | | |
| + 2.0 wt% UHMW siloxane | OSM1 | (100 PE04) | | | |
| (96/4 PE02/SX1) | | | | | |
| 0.25 mil | 0.75 mil | 1.0 mil | | | |
| | | | 0.50-1.44 | 23.0-33.2 | 18.2 |

As can be seen from the data above, the combination of the inorganic or organic antiblock with the UHMW siloxane polymer results in a COF at the time of manufacture that is equal to or below 0.3. The UHMW siloxane polymer does not impact the oxygen scavenging rate and does not significantly increase the haze of the film. Results also indicate that the UHMW siloxane polymer alone cannot achieve a COF value equal to or below 0.3. (Comparative Example 11) The UHMW siloxane polymer must be utilized in combination with an appropriate inorganic or organic antiblock material.

Experiments utilizing an inorganic silica antiblock in a LLDPE sealant layer with other potential particulate slip additives including crosslinked siloxane materials (X-link siloxane), fluoropolymer, and X-link PMMA were also performed. In addition, several other potential particulate slip additives were also examined. These include 8-10 micrometer boron nitride particulates and phase separated domains of an ethylene-norbornene copolymer (ENC). Structures utilized for the investigation and their aged kinetic-static COF and haze values are shown below.

| Sealant | OS | | Bulk | | | Aged COF Kinetic-Static | Haze |
|---|---|---|---|---|---|---|---|
| Comparative Example 12 | | | | | | | |
| LLDPE | | OS1 | | LLDPE | | | |
| + 1.0 wt% silica | | OSM1 | | | | | |
| + 1.5 wt% X-link siloxane (60/10/30 PE02/AB2/MB4) | | | | (100 PE04) | | | |
| 0.25 mil | | 0.75 mil | | 1.0 mil | | | |
| | | | | | | 0.57-0.59 | 14.0 |

| Comparative Example 13 | | | | | | | |
|---|---|---|---|---|---|---|---|
| LLDPE | | OS1 | | LLDPE | | | |
| + 1.0 wt% silica | | OSM1 | | | | | |
| + 1.5 wt% X-link siloxane (60/10/30 PE02/AB2/MB5) | | | | (100 PE04) | | | |
| 0.25 mil | | 0.75 mil | | 1.0 mil | | | |
| | | | | | | 0.55-0.58 | 14.5 |

| Comparative Example 14 | | | | | | | |
|---|---|---|---|---|---|---|---|
| LLDPE | | OS1 | | LLDPE | | | |
| + 1.0 wt% silica | | OSM1 | | | | | |
| + 1.5 wt% fluoropolymer (60/10/30 PE02/AB2/MB7) | | | | (100 PE04) | | | |
| 0.25 mil | | 0.75 mil | | 1.0 mil | | | |
| | | | | | | 0.68-0.72 | 15.3 |

| Comparative Example 15 | | | | | | | |
|---|---|---|---|---|---|---|---|
| LLDPE | | OS1 | | LLDPE | | | |
| + 1.0 wt% silica | | OSM1 | | | | | |
| + 1.5 wt% X-link PMMA (75/10/15 PE02/AB2/MB8) | | | | (100 PE04) | | | |
| 0.25 mil | | 0.75 mil | | 1.0 mil | | | |
| | | | | | | 0.62-0.65 | 14.3 |

| Comparative Example 16 | | | | | | | |
|---|---|---|---|---|---|---|---|
| LINEAR LOW DENSITY POLYETHYLENE | | OS1 | LLDPE | | | | |
| + 1.0 wt% silica | | OSM1 | | | | | |
| + 1.5 wt% X-link PMMA (75/10/15 PE02/AB2/MB9) | | | (100 PE04) | | | | |
| 0.25 mil | | 0.75 mil | 1.0 mil | | | | |
| | | | | | 0.57-0.59 | | 15.3 |

| Comparative Example 17 | | | | | | | |
|---|---|---|---|---|---|---|---|
| LINEAR LOW DEN- SITY POLYETHYL- ENE | | OS1 | EVA | | | | |
| + 1.5 wt% boron nitride(100 SL11) | | OSM1 | + 1.0 wt% silica | | | | |
| | | | (95/5 EV2/AB3) | | | | |
| 0.25 mil | | 0.75 mil | 1.0 mil | | | | |
| | | | | | 1.06-1.19 | | 14.4 |

| Comparative Example 18 | | | | | | | |
|---|---|---|---|---|---|---|---|
| LINEAR LOW DEN- SITY POLYETHYL- ENE | | OS1 | LLDPE | | | | |
| + 5.4 wt% ENC(10/90 PE02/MB 10) | | OSM1 | | | | | |
| | | | (100 PE04) | | | | |
| 0.30 mil | | 0.75 mil | 1.5 mil | | | | |
| | | | | | 0.69-0.71 | | 25.1 |

| Comparative Example 19 | | | | | | | |
|---|---|---|---|---|---|---|---|
| LINEAR LOW DEN- SITY POLYMETHYL- ENE | | OS1 | LLDPE | | | | |
| + 6.0 wt% ENC(94/6 PE02/SL10) | | OSM1 | | | | | |
| | | | (100 PE04) | | | | |
| 0.30 mil | | 0.75 mil | 1.5 mil | | | | |
| | | | | | 0.67-0.68 | | 36.9 |

As can be seen from the data above, the combination of the inorganic silica antiblock with the other particulate additives does not result in an aged COF below 0.3. In addition, use of the particulate boron nitride or ENC does not provide a low COF film. Utilizing the UHMW siloxane particulate in conjunction with a suitable particulate antiblock, an oxygen scavenging film structure having a high-slip/low COF sealant layer for use on HFFS or VFFS equipment can be achieved.

### Laminated Three Layer Films

Several three layer OS films, as seen in Film structure #1, were laminated to 0.5 mil saran coated polyethylene terephthalate (PET1). The bulk layer of the OS film was corona treated, a solvent based adhesive (AD1) was applied to the saran coated side of PET1 and dried, and the two films were brought together and nipped with a heated roll. Structures utilized for the investigation and their kinetic-static COF values after aging (or immediately after manufacture*), as well as refrigerated oxygen scavenging rates, are shown below. "Adh." refers to the adhesive used to laminate the film, while "Barr." refers to the oxygen barrier film laminated to the Bulk layer.

| Sealant | OS | Bulk | Adh. | Barr. | Aged COF Kinetic-Static | Refrigerated OS Rate (cc/m²/day) Avg.-Peak |
|---|---|---|---|---|---|---|
| Control Example 20 | | | | | | |
| LLDPE | OS1 | LLDPE | AD1 | PET1 | | |
| + 1.4 wt% silica (93/7 PE02/AB3) | OSM1 | | | | | |
| | | (100 PE04) | | | | |
| 0.25 mil | 0.75 mil | 1.5 mil | 0.05 mil | 0.5 mil | | |
| | | | | | 0.83-0.85 | 28.1-40.1 |

| Comparative Example 21 | | | | | | |
|---|---|---|---|---|---|---|
| LLDPE | OS1 | LLDPE | AD1 | PET1 | | |
| + 0.5 wt% sil- ica | OSM1 | | | | | |
| + 1.5 wt% erucamide (80/5/15 PE02/AB2/MB 1) | | (100 PE04) | | | | |
| 0.30 mil | 0.75 mil | 1.5 mil | 0.05 mil | 0.5 mil | | |
| | | | | | 0.10-0.15 | 29.1-47.1 |

| Comparative Example 22 | | | | | | |
|---|---|---|---|---|---|---|
| m-LLDPE | OS1 | LLDPE | AD1 | PET1 | | |
| + 1.0 wt% sil- ica | OSM1 | | | | | |
| + 1.5 wt% erucamide (75/10/15 PE07/AB2/MB 2) | | (100 PE04) | | | | |
| 0.25 mil | 0.75 mil | 1.5 mil | 0.05 mil | 0.5 mil | | |
| | | | | | 0.11-0.19 | 33.5-67.3 |

| Example 23 | | | | | | |
|---|---|---|---|---|---|---|
| LLDPE | OS1 | LLDPE | AD1 | PET1 | | |
| + 0.5 wt% sil- ica | OSM1 | | | | | |
| + 2.5 wt% UHMW siloxane (90/5/5 PE02/AB2/SX 1) | | (100 PE04) | | | | |
| 0.25 mil | 0.75 mil | 1.5 mil | 0.05 mil | 0.5 mil | | |
| | | | | | 0.18-0.27* | 28.7-50.8 |

| Example 24 | | | | | | |
|---|---|---|---|---|---|---|
| LLDPE | OS1 | LLDPE | AD1 | PET1 | | |
| + 0.7 wt% sil- ica | OSM1 | | | | | |
| + 1.5 wt% UHMW siloxane (90/7/3 PE02/AB2/SX 1) | | (100 PE04) | | | | |
| 0.25 mil | 0.75 mil | 1.5 mil | 0.05 mil | 0.5 mil | | |
| | | | | | 0.29-0.34 | 26.7-46.2 |

| Example 25 | | | | | | |
|---|---|---|---|---|---|---|
| m-LLDPE | OS1 | LLDPE | AD1 | PET1 | | |
| + 1.0 wt% sil- ica | OSM1 | | | | | |
| + 1.5 wt% UHMW siloxane (87/10/3 PE07/AB2/SX 1) | | (100 PE04) | | | | |
| 0.25 mil | 0.75 mil | 1.5 mil | 0.05 mil | 0.5 mil | | |
| | | | | | 0.26-0.36 | 25.6-42.5 |

| Example 26 | | | | | | |
|---|---|---|---|---|---|---|
| LLDPE | OS1 | LLDPE | AD1 | PET1 | | |
| + 1.0 wt% sil- ica | OSM1 | | | | | |
| + 1.0 wt% UHMW siloxane (88/10/2 PE02/AB2/SX 1) | | (100 PE04) | | | | |
| 0.25 mil | 0.75 mil | 1.5 mil | 0.05 mil | 0.5 mil | | |
| | | | | | 0.32-0.35 | 35.1-62.1 |

| Example 27 | | | | | | |
|---|---|---|---|---|---|---|
| LLDPE | OS1 | LLDPE | AD1 | PET1 | | |
| + 1.4 wt% sil- ica | OSM1 | | | | | |
| + 1.5 wt% UHMW siloxane (90/7/3 PE02/AB3/SX 1) | | (100 PE04) | | | | |
| 0.25 mil | 0.75 mil | 1.5 mil | 0.05 mil | 0.5 mil | | |
| | | | | | 0.32-0.34 | 23.9-68.7 |

| Example 28 | | | | | | |
|---|---|---|---|---|---|---|
| EVA | OS1 | LLDPE | AD1 | PET1 | | |
| + 1.0 wt% zeolite | OSM1 | | | | | |
| + 1.5 wt% UHMW siloxane (92/5/3 EV3/AB5/SX1 ) | | (100 PE04) | | | | |
| 0.25 mil | 0.75 mil | 1.5 mil | 0.05 mil | 0.5 mil | | |
| | | | | | 0.29-0.44 | 36.3-70.5 |

The data above again indicates that the combination of antiblock with UHMW siloxane yields a high slip film with no impact on oxygen scavenging performance. As seen in Example 23, the high slip is attained at the time of manufacture. While film samples from the outer portion of wound rolls show high slip with film aging and no impact on oxygen scavenging (Comparative Examples 21 and 22) for erucamide containing films, delamination of Comparative Example 21 was observed after using the film on a HFFS machine to form a pouch. Delamination of the high-slip film was not observed with the siloxane containing films.

An evaluation of laminated high-slip film seal strength was performed. Seals were made on a Vertrod 84EPCS™ at 400 °F and 150 ms dwell time. Results seen in Table 3 indicate that the high-slip siloxane film has a higher seal strength than a sample with an equivalent amount of erucamide and silica antiblock in the identical metallocene (PE07) sealant resin. It is well known that erucamide migration and transfer negatively impact seal strength.

**Table 3**

| Seal strength for high-slip film-to-film seals made on a Vertrod heat seal unit | | | |
|---|---|---|---|
| **Film** | **Sealant Antiblock/Slip** | **Kinetic-Static COF** | **Average Seal Strength (lb./in.)** |
| Example 25 | 1.0 wt% silica 1.5 wt% UHMW siloxane | 0.26-0.36 | 11.13 ± 0.81 |
| Comparative Example 22 | 1.0 wt% silica 1.5 wt% erucamide | 0.11-0.19 | 5.56 ± 0.78 |

Several of the laminated, siloxane containing, high-slip films were further evaluated. Testing on HFFS equipment, frequently used in the jerky industry, indicated all four siloxane films formed satisfactory pouches. All four of the films have COF values within the desired range of 0.3-0.5. Seal strengths of the pouches with different seal temperatures and dwell times (machine speeds) are seen in Table 4. Good seal strengths are noted for all of the samples, with Example 25 having the highest seal strength at the fastest machine speed (130 ppm). Example 25 likely has the highest seal strength because of the metallocene sealant resin (PE07) employed.

**Table 4**

| Seal strength for pouches made on HFFS equipment from laminated siloxane high-slip OS-Film™ | | | | | | |
|---|---|---|---|---|---|---|
| **Film** | **Sealant Resin** | **Sealant Antiblock/Slip** | **Kinetic-StaticCOF** | **Machine Speed (ppm)** | **Seal Temperature (°F)** | **Average Seal Strength (lb./in.)** |
| Example 26 | PET02 | 1.0 wt% silica 1.0 wt% UHMW siloxane | 0.32-0.35 | 105 | 375 | 8.74 ± 0.92 |
| Example 26 | PE02 | 1.0 wt% silica 1.0 wt% UHMW siloxane | 0.32-0.35 | 130 | 375 | 6.78 ± 1.94 |
| Example 27 | PE02 | 1.4 wt% silica 1.5 wt% UHMW siloxane | 0.32-0.34 | 57 | 340 | 9.17 ± 0.55 |
| Example 27 | PE02 | 1.4 wt% silica 1.5 wt% UHMW siloxane | 0.32-0.34 | 105 | 350 | 7.62 ± 1.03 |
| Example 27 | PE02 | 1.4 wt% silica 1.5 wt% UHMW siloxane | 0.32-0.34 | 130 | 350 | 5.72 ± 2.09 |
| Example 27 | PE02 | 1.4 wt% silica 1.5 wt% UHMW siloxane | 0.32-0.34 | 130 | 375 | 5.96 ± 2.08 |
| Example 25 | PE07 | 1.0 wt% silica 1.5 wt% UHMW siloxane | 0.26-0.36 | 57 | 330 | 5.23 ± 2.11 |
| Example 25 | PE07 | 1.0 wt% silica 1.5 wt% UHMW siloxane | 0.26-0.36 | 57 | 350 | 9.61 ± 0.72 |
| Example 25 | PE07 | 1.0 wt% silica 1.5 wt% UHMW siloxane | 0.26-0.36 | 105 | 330 | 9.04 ± 0.55 |
| Example 25 | PE07 | 1.0 wt% silica 1.5 wt% UHMW | 0.26-0.36 | 105 | 375 | 9.52 ± 0.69 |
| | | siloxane | | | | |
| Example 25 | PE07 | 1.0 wt% silica 1.5 wt% UHMW siloxane | 0.26-0.36 | 130 | 345 | 6.12 ± 1.66 |
| Example 25 | PE07 | 1.0 wt% silica 1.5 wt% UHMW siloxane | 0.26-0.36 | 130 | 375 | 9.54 ± 0.76 |
| Example 28 | EV3 | 1 wt% zeolite 1.5 wt% UHMW siloxane | 0.29-0.44 | 75 | 350 | 6.34 ± 2.48 |
| Example 28 | EV3 | 1 wt% zeolite 1.5 wt% UHMW siloxane | 0.29-0.44 | 105 | 350 | 5.23 ± 2.11 |
| Example 28 | EV3 | 1 wt% zeolite 1.5 wt% UHMW siloxane | 0.29-0.44 | 130 | 375 | 4.83 ± 1.41 |

Another attribute of the film of the invention is the organoleptic properties. Several of the laminated high-slip films were tested versus a control for their organoleptic properties utilizing the test described previously. Siloxane and erucamide containing films that were analyzed are seen in Table 5. Water was used as the taste medium as it provides for a sensitive test. Results indicate that erucamide alters the organoleptic properties of the water packaged in the films, while the siloxane does not

**Table 5**

| **Organoleptic test results for laminated high-slip OSFilms™.** | | | |
|---|---|---|---|
| **Film** | **Sealant Antiblock/Slip** | **Kinetic-StaticCOF** | **Organoleptic Result** |
| Control Example 20 | 1.4 wt% silica | | Control |
| Comparative Example 21 | 0.5 wt% silica 1.5 wt % erucamide | 0.10-0.15 | Significant Difference |
| Example 23 | 0.5 wt% silica 2.5 wt% UHMW siloxane | 0.18-0.27 | No Significant Difference |
| Example 24 | 0.7 wt% silica 1.5 wt% UHMW siloxane | 0.29-0.34 | No Significant Difference |
| Example 25 | 1.0 wt% silica 1.5 wt% UHMW siloxane | 0.26-0.36 | No Significant Difference |

### Five Layer Films

Five-layer symmetric blown films, where the five layers included two outer sealant layers, a core oxygen scavenging layer, and two substrate layers between the core and sealant layers, as depicted schematically below in film structure #2, were prepared. Typical gauges and resins for the five layers are indicated below.

| Sealant | Substrate | OS | Substrate | Sealant |
|---|---|---|---|---|
| PE08/PE03 Antiblock Slip | 100% EV3 | 90% OS1 10% OSM1 | 100% EV3 | PE08/PE03 Antiblock Slip |
| 0.20 mil | 0.10 mil | 0.50 mil | 0.10 mil | 0.20 mil |

Film structure #2 for five layer oxygen scavenging films

The actual film structure, kinetic and static COF values after aging the film several days, and average and peak refrigerated oxygen scavenging rates are seen in the examples below. "Sealant" refers to sealant layer of the film; "OS" refers to oxygen scavenging layer of the film; "Substrate" refers to an additional layer comprising any suitable polymer, such as the EVA shown in the examples, or e.g. an ethylene polymer or copolymer such as ethylene/alpha olefin copolymer.

| Sealant | Substrate | OS | Substrate | Sealant | AgedCOF Kinetic-Static | Refrigerated OS Rate (cc/m²/day) Avg.-Peak |
|---|---|---|---|---|---|---|
| Control Example 29 | | | | | | |
| LLDPE/LD PE | EV3 | OS1 | EV3 | LLDPE/LDPE | | |
| + 1.0 wt% silica (74/21/5 PE08/PE03/ AB3) | | OSM1 | | + 1.0 wt% silica (74/21/5 PE08/PE03/AB3) | | |
| 0.2 mil | 0.1 mil | 0.5 mil | 0.1 mil | 0.2 mil | | |
| | | | | | 0.76-0.83 | 31.5-63.7 |

| Comparative Example 30 | | | | | | |
|---|---|---|---|---|---|---|
| LLDPE/LDPE | EV3 | OS1 | EV3 | LLDPE/LDPE | | |
| + 0.5 wt% X-link siloxane (70/20/10 PE08/PE03/MB4) | | OSM 1 | | + 0.5 wt% X-link siloxane (70/20/10 PE08/PE03/MB4) | | |
| 0.2 mil | 0.1 mil | 0.5 mil | 0.1 mil | 0.2 mil | | |
| | | | | | 0.58-0.73 | 26.0-50.6 |

| Comparative Example 31 | | | | | | |
|---|---|---|---|---|---|---|
| LLDPE/LDPE | EV3 | OS1 | EV3 | LLDPE/LDPE | | |
| + 0.5 wt% fluoropolymer (70/20/10 PE08/PE03/MB6) | | OSM 1 | | + 0.5 wt% fluoropolymer (70/20/10 PE08/PE03/MB6) | | |
| 0.2 mil | 0.1 mil | 0.5 mil | 0.1 mil | 0.2 mil | | |
| | | | | | 0.67-0.74 | 30.7-56.7 |

| Comparative Example 32 | | | | | | |
|---|---|---|---|---|---|---|
| LLDPE/LDPE | EV3 | OS1 | EV3 | LLDPE/LDPE | | |
| + 0.5 wt% silica (74/21/5 PE08/PE03/MB3) | | OSM 1 | | + 0.5 wt% silica (74/21/5 PE08/PE03/MB3) | | |
| 0.2 mil | 0.1 mil | 0.5 mil | 0.1 mil | 0.2 mil | | |
| | | | | | 0.94-1.00 | 29.1-53.5 |

| Example 33 | | | | | | |
|---|---|---|---|---|---|---|
| LLDPE/LDPE | EV3 | OS1 | EV3 | LLDPE/LDPE | | |
| + 1.0 wt% silica + 1.0 wt% UHMW siloxane (74/19/5/2 PE08/PE03/AB3/ SX2) | | OSM 1 | | + 1.0 wt% silica + 1.0 wt% UHMW siloxane (74/19/5/2 PE08/PE03/AB3/ SX2) | | |
| 0.2 mil | 0.1 mil | 0.5 mil | 0.1 mil | 0.2 mil | | |
| | | | | | 0.34-0.41 | 26.5-53.4 |

As can be seen from the data above, the combination of the inorganic antiblock with the UHMW siloxane polymer in the sealant layer results in a COF that is below 0.4 for five-layer symmetric films. The UHMW siloxane polymer does not significantly impact the oxygen scavenging rate.

### Laminated Eight Layer Films

Eight-layer blown films, where the eight layers include an EVOH barrier layer, nylon stiffening layers and tie layers, in addition to the sealant, oxygen scavenging, and bulk layers, were also prepared. These films were laminated to 0.5 mil chemically primed polyethylene terephthalate (PET2). The bulk layer of the eight layer OS film was corona treated, a solvent based adhesive (AD 1) was applied to the chemically primed side of PET2 and dried, and the two films were brought together and nipped with a heated roll. The actual film structure, kinetic and static COF values after aging the film several days, and average and peak refrigerated oxygen scavenging rates are seen in the examples below.

| Sealant | OS | Tie | Nylon | EVOH | Nylon | Tie | Bulk Adh. | | PET |
|---|---|---|---|---|---|---|---|---|---|
| Control Example 34 | | | | | | | | | |
| LLDPE | OS1 | AD2 | NY1/N | OB1 | NY1/N | AD2 | LDPE | AD | PET |
| + 1.0 wt% silica (95/5 PE02/ AB3) | OSM 1 (90/1 0) | | Y2 (80/20) | | Y2 (80/20) | | (PE09) | 1 | 2 |
| 0.25 mil | 0.75 mil | 0.18 mil | 0.15 mil | 0.20 mil | 0.15 mil | 0.15 mil | 0.68 mil | 0.05 mil | 0.5 mil |
| | | | | | | Aged COF Kinetic-Static | | Refrigerated OS Rate (cc/m²/day) Avg.-Peak | |
| | | | | | | | | 33.6-63.5 | |

| Example 35 | | | | | | | | | |
|---|---|---|---|---|---|---|---|---|---|
| LLDPE + 1.4 wt% silica + 2 wt% siloxane (89/7/4 PE02/A B3/SX1) | OS1 OSM2 (90/10) | AD2 | NY1/N Y2 (80/20) | OB1 | NY1/N Y2 (80/20) | AD2 | m-LLDPE LDPE + 0.4 wt% silica (78/20/ 2 PE10/P E11/A B3) | AD 1 | PET2 |
| 0.25 mil | 0.75 mil | 0.18 mil | 0.20 mil | 0.25 mil | 0.18 mil | 0.20 mil | 0.50 mil | 0.05 mil | 0.5 mil |
| | | | | | | | Aged COF Kinetic-Static | Refrigerated OS Rate (cc/m²/day) Avg.-Peak | |
| | | | | | | | 0.32-0.43 | 31.8-58.2 | |

| Example 36 | | | | | | | | | |
|---|---|---|---|---|---|---|---|---|---|
| m-LLDPE + 1.6 wt% silica + 2 wt% siloxane (88/8/4 PE07/A B3/SX1) | OS1 OSM2 (90/10) | AD2 | NY1/N Y2 (80/20) | OB1 | NY1/N Y2 (80/20) | AD2 | m-LLDPE LDPE + 0.4 wt% silica (78/20/ 2 PE10/P E11/A B3) | AD 1 | PET2 |
| 0.25 mil | 0.75 mil | 0.18 mil | 0.20 mil | 0.25 mil | 0.18 mil | 0.20 mil | 0.50 mil | 0.05 mil | 0.5 mil |
| | | | | | | | Aged COF Kinetic-Static | Refrigerated OS Rate (cc/m²/day) Avg.-Peak | |
| | | | | | | | 0.34-0.48 | 34.4-66.0 | |

As can be seen in the examples above, siloxane in the sealant layer of eight layer laminated films can provide a high-slip film while maintaining oxygen scavenging performance.

### Nine Layer Films

Nine-layer cast films, where the nine layers include an EVOH barrier layer, nylon stiffening layers and tie layers, in addition to the sealant and oxygen scavenging layers, were also prepared. Because of the outer nylon layer, these films were not laminated. The actual film structure, kinetic and static COF values after aging the film several days, and average and peak refrigerated oxygen scavenging rates are seen in the examples below.

| Sealant | OS | | Tie | Nylon | EVOH | | Nylon | | Nylon | | Tie | Nylon |
|---|---|---|---|---|---|---|---|---|---|---|---|---|
| Control Example 37 | | | | | | | | | | | | |
| m-LLDPE + 1.4 wt% silica (93/7 PE07/) AB3) | | OS1 OSM2 (90/10 | AD3 | NY 3/N Y2 (80/ 20) | OB1 | | NY3/N Y2 (80/20) | | NY2 | | AD4 | NY4/SL 12/SL13 (96/2/2) |
| 0.25 mil | | 0.74 mil | 0.35 mil | 0.28 mil | 0.21 mil | | 0.28 mil | | 0.42 mil | | 0.63 mil | 0.35 mil |
| | | | | | | | | | Aged COF Kinetic-Static | | Refrigerated OS Rate (cc/m²/day) Avg.-Peak | |
| | | | | | | | | | 1.34-1.67 | | 28.1-58.1 | |

| Example 38 | | | | | | | | | | | | |
|---|---|---|---|---|---|---|---|---|---|---|---|---|
| m-LLDPE + 1.6 wt% silica + 2 wt% siloxane (88/8/4 PE07/ AB3/SX1) | | OS1 OSM 2 (90/1 0) | AD4 | NY 3/N Y2 (80/ 20) | OB1 | | NY3/N Y2 (80/20) | | NY2 | | AD4 | NY4/N Y2/ SL12/SL 13 (74/20/3/ 3) |
| 0.25 mil | | 0.74 mil | 0.28 mil | 0.28 mil | 0.21 mil | | 0.28 mil | | 0.42 mil | | 0.70 mil | 0.35 mil |
| | | | | | | | | | Aged COF Kinetic-Static | | Refrigerated OS Rate (cc/m²/day) Avg.-Peak | |
| | | | | | | | | | 0.25-0.31 | | 30.3-84.9 | |

| Example 39 | | | | | | | | | | | | |
|---|---|---|---|---|---|---|---|---|---|---|---|---|
| EVA + 1.4 | OS1 OSM2 | | AD4 | NY 3/N | OB1 | NY3/N Y2 | | NY2 | | AD4 | NY4/NY 2/ | |
| | | wt% silica + 2.5 wt% siloxane (88/7/5 EV4/ AB3/SX 1) | (90/10) | | Y2 (80/ 20) | | (80/20) | | | SL12/SL 13 (74/20/3/ 3) | | |
| | | 0.25 mil | 0.74 mil | 0.35 mil | 0.28 mil | 0.21 mil | 0.28 mil | 0.42 mil | 0.63 mil | 0.35 mil | | |
| | | | | | | | | | Aged COF Kinetic-Static | Refrigerated OS Rate (cc/m²/day) Avg.-Peak | | |
| | | | | | | | | | 0.21-0.32 | 35.3-65.4 | | |

As can be seen in the examples above, siloxane in the sealant layer of nine layer films can provide a high-slip film while maintaining oxygen scavenging performance.

Unless indicated otherwise, percentages of siloxane refer to the percentage of the siloxane material per se, not the percentage of masterbatch in a sealant film. The levels of siloxane within the siloxane masterbatch can, as indicated herein, be varied, and will of course affect the amount of masterbatch needed to achieve a given or desired level of siloxane.

The invention is not limited to the illustrations described herein, which are deemed to be merely illustrative, and susceptible of modification of form, size, arrangement of parts and details of operation.

For example, in another embodiment, a substrate such as a paper (e.g. cardboard box, stand up paper box or container, gable top carton, etc.), metal (e.g. "doyen" container), or plastic (e.g. bottle) substrate, can be extrusion coated, by a conventional process, with a melt comprising a first layer comprising an oxygen scavenger, and a second layer comprising a blend of a polymer, a siloxane having a viscosity of from 1x10⁷ centistokes to 5x10⁷ centistokes, and an antiblock agent. The oxygen scavenger, polymer, siloxane, and antiblock agent can be any of those disclosed herein. In one embodiment, the first layer can be in contact with the substrate after the extrusion coating step, and the second layer can constitute a sealant layer. Representative structures are as follows:
Paper substrate//oxygen scavenger layer/sealant layer with siloxane and antiblock
Metal substrate//oxygen scavenger layer/sealant layer with siloxane and antiblock
Plastic substrate//oxygen scavenger layer/sealant layer with siloxane and antiblock

The two extrusion coated layers can be extruded simultaneously or sequentially. Additional layers can be included in the extrusion coat, as disclosed herein for multilayer films. A polymer layer, e.g., can be extruded with or otherwise adhered to the oxygen scavenger layer, such that it is the layer in contact with the substrate.

The substrate can comprise a polymeric material, such as a polymer film comprising e.g. a metalized or PVDC coated material selected from:
i) polyethylene terephthalate
ii) oriented polyamide
iii) oriented polypropylene.

Alternatively, the substrate can comprise a polymer film comprising an oriented three layer film comprising a polyamide layer, an ethylene vinyl alcohol layer, and a polyamide layer.

Any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited.

## Claims

1. A multilayer film comprising:
a) a first and second outer layer each comprising a polymer; and
b) an internal layer comprising an oxygen scavenger; **characterized in that** said at least one of the first and second outer layers comprises a blend of said polymer, an antiblock agent and a siloxane having a viscosity of from 1x10⁷ centistokes to 5x10⁷ centistokes, and, **in that** the kinetic coefficient of friction (film surface to film surface) of the film is 0.4 or less (ASTM D1894-99); and
**in that** the average oxygen scavenging rate of the film is at least 20 cc/m²/day four days after an oxygen scavenging property of the film is activated.

2. The multilayer film of claim 1 wherein the polymer of the first and second outer layers comprises a material selected from the group consisting of ethylene/alpha olefin copolymer, ethylene/vinyl acetate copolymer, polyamide, polyester, maleic anhydride modified polyolefin, ionomer resin, ethylene/ acrylic or methacrylic acid copolymer, ethylene/ acrylate or methacrylate copolymer; and low density polyethylene.

3. The multilayer film of claim 1 wherein the kinetic coefficient of friction (film surface to film surface) of the film is 0.3 or less (ASTM D1894-99).

4. The multilayer film of claim 1 wherein the film is cross-linked.

5. The multilayer film of claim 1 wherein the film is biaxially oriented and heat shrinkable.

6. The multilayer film of claim 1 wherein the oxygen scavenger comprises a material selected from the group consisting of:
i) oxidizable organic compound and a transition metal catalyst,
ii) ethylenically unsaturated hydrocarbon and a transition metal catalyst,
iii) a reduced form of a quinone, a photoreducible dye, or a carbonyl compound which has absorbence in the UV spectrum,
iv) a polymer having a polymeric backbone, cyclic olefinic pendent group, and linking group linking the olefinic pendent group to the polymeric backbone,
v) a copolymer of ethylene and a strained, cyclic alkylene,
vi) ethylene/vinyl aralkyl copolymer,
vii) ascorbate,
viii) isoasorbate,
ix) sulfite,
x) ascorbate and a transition metal catalyst, the catalyst comprising a simple metal or salt, or a compound, complex or chelate of the transition metal,
xi) a transition metal complex or chelate of a polycarboxylic acid, salicylic add, or polyamine,
xii) a tannin, and
xiii) reduced metal.

7. The multilayer film of claim 1 comprising a photoinitiator selected from the group consisting of benzophenone and its derivatives, tribenzoyl triphenylbenzene, tritoluoyl triphenylbenzene, thioxanthen-9-one, isopropylthioxanthen-9-one, 2,4,6-trimethylbenzoyldiphenylphosphine oxide, bis(2,4,6-trimethylbenzoyl)phenylphosphine oxide, ethyl-2,4,6-trimethylbenzoylphenyl phosphinate, bis(2,6-dimethoxybenzoyl)-2,4,4-trimethylpentyl phosphine oxide, and 4-benzoyl-4'-methyl(diphenyl sulfide).

8. The multilayer film of claim 1 comprising an oxygen barrier layer, disposed between the internal layer comprising the oxygen scavenger, and at least one of the first and second outer layers, the oxygen barrier layer having an oxygen transmission rate of no more than 100 cc/m²/24hr at 25°C, 0% RH, 1 atm (ASTM D 3985).

9. The multilayer film of claim 8 wherein the oxygen barrier layer comprises a material selected from the group consisting of polyester, polyvinyl alcohol, ethylene vinyl alcohol copolymer, polyethylene naphthalate, polyamide, copolyamide, polyacrylonitrile, acrylonitrile copolymer, liquid crystal polymer, SiOₓ, polyvinyl chloride, polyvinylidene chloride, vinylidene chloride copolymer, carbon, metal, and metal oxide.

10. The film of claim 1 comprising a substrate bonded to the first or second outer layer.

11. The film of claim 10 wherein the substrate comprises a metal.

12. The film of claim 10 wherein the substrate comprises a paperboard.

## Patentansprüche

1. Mehrschichtfolie, die
a) eine jeweils ein Polymer umfassende erste und zweite äußere Schicht und
b) eine einen Sauerstofffänger umfassende Innenschicht umfasst,
**dadurch gekennzeichnet, dass** mindestens eine der ersten und zweiten äußeren Schichten eine Mischung aus dem Polymer, einem Antiblookingmittel, und einem Siloxan mit einer Viskosität von 1x10⁷ Centistokes bis 5x10⁷ Centistokes umfasst und dass der GleitReibungskoeffizient (Folienoberfläche auf Folienoberfläche) der Folie 0,4 oder weniger (ASTM D1894-99) beträgt und dass die durchschnittliche Sauerstoffabfangrate der Folie vier Tage, nachdem eine Sauerstoffabfangeigenschaft der Folie aktiviert worden ist, mindestens 20 cm³/m²/Tag beträgt.

2. Mehrschichtfolie nach Anspruch 1, bei der das Polymer der ersten und zweiten äußeren Schichten ein Material ausgewählt aus der Gruppe bestehend aus Ethylen/alpha-Olefin-Copolymer, Ethylen/Vinylacetat-Copolymer, Polyamid, Polyester, Maleinsäureanhydrid-modifiziertes Polyolefin, Ionomerharz, Ethylen/Acryl- oder Methacrylsäure-Copolymer, Ethylen/Acrylat- oder Methacrylat-Copolymer und Polymethylen niederer Dichte ist.

3. Mehrschichtfolie nach Anspruch 1, bei der der GleitReibungskoeffizient (Folienoberfläche auf Folienoberfläche) der Folie 0,3 oder weniger (ASTM D1894-99) beträgt.

4. Mehrschichtfolie nach Anspruch 1, die vernetzt ist.

5. Mehrschichtfolie nach Anspruch 1, die biaxial orientiert und wärmeschrumpfbar ist.

6. Mehrschichtfolie nach Anspruch 1, bei der der Sauerstofffänger ein Material ausgewählt aus der Gruppe bestehend aus
i) oxidierbare organische Verbindung und ein Übergangsmetallkatalysator,
ii) ethylenisch ungesättigter Kohlenwasserstoff und ein Übergangsmetallkatalysator,
iii) eine reduzierte Form von einem Chinon, einem fotoreduzierbaren Farbstoff oder einer Carbonylverbindung, die Absorbtion im UV-Spektrum aufweist,
iv) ein Polymer mit einem Polymergerüst, cyclischer olefinischer Seitengruppe und die olefinische Seitengruppe an das polymere Gerüst bindender Verbindungsgruppe,
v) Copolymer von Ethylen und einem gespannten cyclischen Alkylen,
vi) Ethylen/Vinylaralkyl-Copolymer,
vii) Ascorbat,
viii) Isoascorbat,
ix) Sulfit,
x) Ascorbat und ein Übergangsmetallkatalysator, wobei der Katalysator ein einfaches Metall oder Salz oder eine Verbindung, einen Komplex oder ein Chelat des Übergangsmetalls umfasst,
xi) Übergangsmetallkomplex oder -chelat einer Polycarbonsäure, Salicylsäure oder Polyamin,
xii) ein Tannin und
xiii) reduziertes Metall umfasst.

7. Mehrschichtfolie nach Anspruch 1, die einen Fotoinitiator ausgewählt aus der Gruppe bestehend aus Benzophenon und seinen Derivaten, Tribenzoyltriphenylbenzol, Tritoluoyltriphenylbenzol, Thioxanthen-9-on, Isopropylthioxanthen-9-on, 2,4,6-Trimethylbenzoyldiphenylphosphinoxid, bis(2,4,6-Trimethylbenzoyl)phenylphosphinoxid, Ethyl-2,4,6 - trimethylbenzoylphenylphosphinat, bis(2,6-Di methoxybenzoyl)-2,4,4-trimethylpentylphosphinoxid, und 4-Benzoyl-4'-methyl(diphenylsulfid) umfasst.

8. Mehrschichtfolie nach Anspruch 1, die eine Sauerstoffbarriereschicht angeordnet zwischen der den Sauerstoffabfänger umfassenden Innenschicht und mindestens einer der ersten und zweiten äußeren Schichten umfasst, wobei die Sauerstoffbarriereschicht eine Sauerstoffdurchlässigkeitsrate von nicht mehr als 100 cm³/m²/24h bei 25°C, 0% relative Luftfeuchtigkeit und 1 atm (ASTM D 3985) aufweist.

9. Mehrschichtfolie nach Anspruch 8, bei der die Sauerstoffbarriereschicht ein Material ausgewählt aus der Gruppe bestehend aus Polyester, Polyvinylalkohol, Ethylenvinylalkoholcopolymer, Polyethylennaphthalat, Polyamin, Copolyamid, Polyacrylnitril, Acrylnitrilcopolymer, Flüssigkristallpolymer, SiOₓ, Polyvinylchlorid, Polyvinylidenchlorid, Vinylildenchloridcopolymer, Kohlenstoff, Metall und Metalloxid umfasst.

10. Folie nach Anspruch 1, die ein an die erste oder zweite äußere Schicht gebundenes Substrat umfasst.

11. Folie nach Anspruch 10, bei der das Substrat ein Metall umfasst.

12. Folie nach Anspruch 10, bei der das Substrat Pappe umfasst.

## Revendications

1. Film multicouche comprenant :
a) une première et une deuxième couches externes comprenant chacune un polymère,
b) et une couche interne comprenant un agent fixant l'oxygène, **caractérisé en ce qu'**au moins l'une desdites première et deuxième couches externes comprend un mélange dudit polymère, d'un agent anti-adhérence et d'un siloxane présentant une viscosité de 1.10⁷ à 5.10⁷ centistokes, et **en ce que** le coefficient cinétique de frottement du film (surface de film contre surface de film) vaut au plus 0,4 (norme ASTM D 1894-99),
et **en ce que**, quatre jours après l'activation de sa capacité de fixation de l'oxygène, le film présente un degré moyen de fixation de l'oxygène d'au moins 20 cm³/m² par jour.

2. Film multicouche conforme à la revendication 1, dans lequel le polymère des première et deuxième couches externes comprend un matériau choisi dans l'ensemble formé par les suivants : copolymères d'éthylène et d'alpha-oléfine, copolymère d'éthylène et d'acétate de vinyle, polyamides, polyesters, polyoléfines modifiées avec de l'anhydride maléique, résines ionomères, copolymère d'éthylène et d'acide acrylique ou méthacrylique, copolymères d'éthylène et d'acrylate ou de méthacrylate, et polyéthylène basse densité.

3. Film multicouche conforme à la revendication 1, duquel film le coefficient cinétique de frottement (surface de film contre surface de film) vaut au plus 0,3 (norme ASTM D 1894-99).

4. Film multicouche conforme à la revendication 1, lequel film est réticulé.

5. Film multicouche conforme à la revendication 1, lequel film est orienté biaxialement et thermorétractable.

6. Film multicouche conforme à la revendication 1, dans lequel l'agent fixant l'oxygène comprend un matériau choisi dans l'ensemble formé les suivants :
i) un composé organique oxydable et un catalyseur à base de métal de transition ;
ii) un hydrocarbure à insaturation éthylénique et un catalyseur à base de métal de transition ;
iii) une forme réduite d'une quinone, un colorant photo-réductible, ou un composé carbonylé absorbant dans le domaine UV ;
iv) un polymère comportant un squelette polymère, un groupe latéral de type oléfine cyclique et un groupe de raccord qui rattache le groupe latéral oléfinique au squelette polymère ;
v) un copolymère d'éthylène et d'un alcène cyclique contraint ;
vi) un copolymère d'éthylène et de composé aralkyl-vinylique ;
vii) un ascorbate ;
viii) un isoascorbate ;
ix) un sulfite ;
x) un ascorbate et un catalyseur à métal de transition, lequel catalyseur comprend simplement du métal de transition ou l'un de ses sels, ou bien un composé, complexe ou chélate du métal de transition ;
xi) un complexe ou un chélate de métal de transition d'un acide poly-carboxylique, de l'acide salicylique ou d'une polyamine ;
xii) un tanin ;
xiii) et un métal réduit.

7. Film multicouche conforme à la revendication 1, comprenant un photo-amorceur choisi dans l'ensemble constitué par les suivants : benzophénone et ses dérivés, tribenzoyl-triphényl-benzène, tritoluoyltriphényl-benzène, thioxanthène-9-one, isopropyl-thioxanthène-9-one, (2,4,6-triméthyl-benzoyl)-diphényl-phosphine-oxyde, bis-(2,4,6-triméthyl-benzoyl)-phényl-phosphine-oxyde, (2,4,6-triméthyl-benzoyl)-phényl-phosphinate d'éthyle, bis-(2,6-diméthoxy-benzoyl)-(2,4,4-triméthyl-pentyl)-phosphine-oxyde, et 4-benzoyl-4'-méthyl-diphényl-sulfure.

8. Film multicouche conforme à la revendication 1, comprenant une couche formant barrière à l'oxygène, disposée entre la couche interne comprenant l'agent fixant l'oxygène et au moins l'une des première et deuxième couches externes, laquelle couche formant barrière à l'oxygène présente une vitesse de transmission d'oxygène d'au plus 100 cm³/m² par 24 heures à 25 °C et 0 % d'humidité relative sous 1 atm (norme ASTM D-3985).

9. Film multicouche conforme à la revendication 8, dans lequel la couche formant barrière à l'oxygène comprend un matériau choisi dans l'ensemble formé par les suivants : polyesters, poly(alcool vinylique), copolymère d'éthylène et d'alcool vinylique, poly(éthylène naphtalate), polyamides, copolyamides, polyacrylonitrile, copolymères d'acrylonitrile, cristaux liquides polymères, matériaux de formule SiOₓ, poly(chlorure de vinyle), poly(chlorure de vinylidène), copolymères de chlorure de vinylidène, carbone, métaux et oxydes de métal.

10. Film conforme à la revendication 1, comprenant un substrat attaché à la première ou à la deuxième des couches externes.

11. Film conforme à la revendication 10, dans lequel le substrat comprend un métal.

12. Film conforme à la revendication 10, dans lequel le substrat comprend un carton.
